# EUROPÄISCHE PATENTSCHRIFT

(11) **EP 3 423 746 B1**
(45) Veröffentlichungstag und Bekanntmachung des Hinweises auf die Patenterteilung: **03.11.2021**
(21) Anmeldenummer: 17709404.2
(22) Anmeldetag: 02.03.2017
(51) Int. Cl.: F21S 2/00, F21S 8/06, F21V 21/34, F21V 21/35, F21Y 115/15

(54) **OLED-BELEUCHTUNGSSYSTEM SOWIE OLED-LEUCHTENMODUL**
OLED LIGHTING SYSTEM AND OLED LIGHTING MODULE
SYSTÈME D'ÉCLAIRAGE À OLED ET MODULE D'ÉCLAIRAGE À OLED

(30) Priorität: 04.03.2016 DE 102016103991
(43) Veröffentlichungstag der Anmeldung: 09.01.2019
(73) Patentinhaber: emdedesign GmbH, 60389 Frankfurt am Main (DE)
(72) Erfinder: PETERSEN, Christoph, 35423 Lieh (DE); EMDE, Thomas, 60389 Frankfurt am Main (DE)
(74) Vertreter: Fritz, Edmund Lothar
(86) Internationale Anmeldenummer: PCT/EP2017/054944
(87) Internationale Veröffentlichungsnummer: WO 2017/149089

(56) Entgegenhaltungen:
- WO-A2-2008/040323
- DE-A1-102014 116 739
- DE-U1-202007 001 888
- US-A1- 2002 024 812
- US-A1- 2010 045 175
- US-A1- 2012 287 671

## Beschreibung

Die vorliegende Erfindung betrifft ein Beleuchtungssystem umfassend wenigstens ein Gleichstrom führendes Stromversorgungssystem, an dem wenigstens ein OLED-Leuchtenmodul anbringbar ist, wobei das OLED-Leuchtenmodul ein flächiges OLED-Leuchtmittel umfasst, sowie mindestens eine mindestens teilweise lichtdurchlässige Trägerplatte und wobei das OLED-Leuchtenmodul von außerhalb kontaktierbare Mittel für die Stromversorgung aufweist, die einen unmittelbaren Anschluss des OLED-Leuchtenmoduls an eine Gleichspannungsquelle ermöglichen, wobei das Stromversorgungssystem wenigstens eine Stromschiene umfasst mit einer schlitzartigen stromführenden Aufnahme, wobei in die schlitzartige Aufnahme der Stromschiene das OLED-Leuchtenmodul einschiebbar ist, derart, dass zwischen den Mitteln zur Stromversorgung des OLED-Leuchtenmoduls und stromführenden Elementen in der schlitzartigen Aufnahme der Stromschiene ein elektrischer Kontakt hergestellt wird.

Aus der US 2010/0045175 A1 ist ein Beleuchtungssystem bekannt, umfassend ein Stromversorgungssystem, an dem mehrere OLED-Leuchtenmodule anbringbar sind, wobei die OLED Leuchtenmodule jeweils ein flächiges OLED-Leuchtmittel umfassen. Bei diesem bekannten Beleuchtungssystem werden zwei unterschiedliche Sorten von Verbindern verwendet. Die eine Sorte Verbinder ist rein mechanischer Art und hat an beiden Seiten jeweils eine schlitzartige Aufnahme, in die jeweils der Kantenbereich einer OLED eingeschoben werden kann. Die andere Sorte Verbinder eignet sich sowohl für eine mechanische als auch gleichzeitig eine elektrische Verbindung und hat eine ähnliche Form wie die mechanischen Verbinder, wobei in den Schlitzen jeweils elektrische Kontakte vorgesehen sind, die mit zwei Kontakten der OLED in Kontakt treten. An der anderen Seite des Verbinders kann eine weitere OLED eingeschoben werden. In den gleichen Schlitz des Verbinders wird jedoch immer nur eine OLED eingeschoben. Da die OLEDs auf beiden Seiten jeweils zwei Kontakte aufweisen, fließt bei einer Anordnung mit mehreren Verbindern dieser Art der Strom durch die OLED zum Verbinder und von dort zur nächsten OLED, die auf der anderen Seite in den Verbinder eingeschoben wifd. Es handelt sich hier somit um eine Reihenschaltung der OLEDs.

Die US 2012/287671 A1 beschreibt eine modulare Beleuchtungsanordnung, bei der die einzelnen Leuchten plattenförmige Lichtleiter umfassen und über eine Lichtquelle Licht in die plattenförmigen Lichtleiter eingespeist wird. Bei einer Variante dieser Beleuchtungsanordnung können die einzelnen Licht leitenden Platten in eine Stromschiene eingeschoben werden, wobei mehrere Leuchten nebeneinander mit Abstand an einer Stromschiene angebracht werden können. Es handelt sich hier nicht um OLED-Leuchtenmodule mit flächigen OLED-Leuchtmitteln im Sinne der vorliegenden Erfindung, denn das Leuchtmittel ist hier in einem zylindrischen Abschnitt untergebracht, über den das Licht in den plattenförmigen Lichtleiter eingespeist wird und auf der dem Lichtleiter abgewandten Seite des zylindrischen Abschnitts befindet sich ein stegartiger Eingriffsabschnitt, der in die Stromschiene eingeschoben wird. Es werden hier nicht die Kontakte eines flächigen OLED-Leuchtmittels in die Stromschiene eingeschoben.

Die US 2002/024812 A1 beschreibt ein typisches Stromschienensystem für Strahler, die mit Niedervolt-Halogen-Leuchtmitteln betrieben werden, wobei mehrere solcher meist gelenkiger Strahler nebeneinander und mit Abstand zueinander an der gleichen Stromschiene angebracht werden können. Das Stromschienensystem ist nicht spezifisch für OLED-Leuchtenmodule mit flächigen OLED-Leuchtmitteln vorgesehen oder geeignet.

Die DE 10 2014 116 739 A1 beschreibt eine OLED-Leuchte bei der ein oder mehrere OLED-Panels auf eine mindestens teilweise lichtdurchlässige Trägerplatte aufgebracht werden. Die Kontaktierung der OLED-Panels erfolgt bei dieser bekannten Lösung über auf die Trägerplatte aufgedruckte Leiterbahnen, auf die wiederum Kontaktschuhe unter Herstellung einer leitenden Verbindung aufgelötet sind. Die Kontaktschuhe weisen außerdem Befestigungsvorrichtungen auf, mittels derer die OLED-Panel auf der Trägerplatte klemmend befestigt werden können. Oberhalb der Trägerplatte kann zusätzlich eine plattenförmige Abdeckung vorgesehen sein, damit die OLED-Panels auf der Oberseite der Trägerplatte für den Betrachter nicht sichtbar sind. Diese plattenförmige Abdeckung besteht aus einem dünnen Metallblech und sorgt für ein ästhetisch ansprechendes Erscheinungsbild der Leuchte, hat aber bei dieser bekannten Leuchte darüber hinaus keine weitere technische Funktion.

Bei einer ersten in der Druckschrift DE 10 2014 116 739 A1 beschriebenen Variante sind auf der Trägerplatte mehrere OLED-Panels so angeordnet, dass sie in Reihe geschaltet sind. Dies bedeutet, dass bei einem Defekt nur eines OLED-Panels auch alle anderen OLED-Panels kein Licht mehr abgeben, da der Strom nicht mehr durch das defekte OLED-Panel zu den weiteren OLED-Leuchtmitteln durchgeleitet wird. In dieser Druckschrift ist auch eine Variante beschrieben, bei der die auf der Trägerplatte befindlichen OLED-Panels zueinander parallel geschaltet sind. Dies erfordert aber die Anordnung jeweils einer Konstantstromquelle und einer Überwachungselektronikschaltung in jeder Zweigleitung, die zu einem OLED-Panel führt. Die für einen Betrieb in Parallelschaltung erforderlichen elektronischen Bauelemente sind hier also nicht in das OLED-Leuchtenmodul integriert, sondern befinden sich zu diesem separat auf der Trägerplatte. Ein unmittelbares Anschließen mehrerer OLED-Panels in Parallelschaltung ist hier also nicht möglich, da die OLED-Panels dazu nicht ausgebildet sind. Außerdem sind die einzelnen OLED-Panels hier nicht autark ausgebildet zur Verwendung in einem beliebigen Stromversorgungssystem, sondern sie erfordern eine für den Anschluss solcher OLED-Panels eingerichtete Trägerplatte, auf der sie befestigt werden und durch die hindurch sie ihr Licht abgeben. Eine Verwendung der OLED-Panels in Verbindung mit beispielsweise einem Stromschienensystem ist hier nicht vorgesehen.

Die ältere nicht vorveröffentlichte Anmeldung DE 10 2014 116 740.6 vom 17.11.2014 beschreibt eine OLED-Leuchte mit zwei oder mehreren OLED-Panels auf einer gemeinsamen Trägerplatte, bei der eine zweite Platte als Deckplatte vorgesehen ist, wobei diese Deckplatte auf der der Trägerplatte gegenüber liegenden Rückseite der OLED-Panels angeordnet ist und sich Kontaktmittel zur Kontaktierung der OLED-Panels an dieser Deckplatte befinden. Hier werden somit die OLED-Panels nicht mehr unmittelbar über Kontaktmittel auf der Trägerplatte kontaktiert, sondern über die Deckplatte, wobei auf die den OLED-Panels zugewandte Fläche der Deckplatte Leiterbahnen aufgebracht werden können. Dabei stehen die Kontaktmittel, die die OLED-Panels kontaktieren, mit Leiterbahnen auf der Deckplatte in elektrisch leitender Verbindung. Diese Leiterbahnen können wiederum vorzugsweise mit weiteren Kontaktelementen elektrisch verbunden sein, über die die Spannungsversorgung der quasi als Platine ausgebildeten Deckplatte erfolgt. Diese weiteren Kontaktelemente können wiederum mit Kontaktflanschen elektrisch leitend verbunden sein, über die die Einspeisung des Stroms in die Leuchte erfolgt, wobei diese Kontaktflansche beispielsweise auf der Trägerplatte angebracht sein können.

Die vorgenannte bekannte OLED-Leuchte ist für mehrere OLED-Panels konzipiert, die bei bestimmten Leuchtentypen wie zum Beispiel einer langgestreckten Pendelleuchte benötigt werden. Die Kontaktflansche, über die der Strom in die Leuchte eingespeist wird, befinden sich innerhalb des Umrisses der Trägerplatte, welche, da sie mehrere OLED-Panels aufnimmt, in ihrer Längenabmessung entsprechend dimensioniert ist. Da es sich um eine Pendelleuchte handelt, kann der Strom über die Aufhängung der Leuchte den Kontaktflanschen auf der Trägerplatte zugeführt werden.

Organische LED-Leuchtmittel, hierin nachfolgend als OLED-Leuchtmittel bezeichnet, gewinnen in letzter Zeit zunehmend an Bedeutung, da ihre Effektivität und Lichtausbeute steigt und die Herstellungskosten sinken. Typische OLED-Leuchtmittel kommen derzeit als flache OLED-Panels auf den Markt und haben zumeist einen rechteckigen Umriss. Beispielhaft seien hier die OLED-Panels der Fa. OLEDWorks genannt, die bei einer Größe von 124,5 x 124,5 mm einen Lichtstrom von 300 lumen weißes Licht liefern, was von der Lichtstärke her für viele Anwendungen beispielsweise im Bereich von Wohnraumleuchten ausreichend ist. Es wird verwiesen auf die Veröffentlichung im Internet unter http://oledworks.com/products/lumiblade.php?slick0=4

Nachteilig an OLED-Leuchtmitteln dieses Typs ist jedoch, dass deren Kontaktelemente so konzipiert sind, dass sich mehrere dieser Leuchtmittel ohne weitere Vorkehrungen nur in einer Reihenschaltung miteinander kombinieren lassen. Dies schränkt ihre Anwendung in OLED-Leuchten, für die mehrere dieser OLED-Leuchtmittel verwendet werden sollen, stark ein. Eine Reihenschaltung der OLED-Leuchtmittel in einer Leuchte bedeutet, dass bei Ausfall eines der OLED-Leuchtmittels aufgrund eines Defekts alle Leuchtmittel ausfallen, da die intakten OLED-Leuchtmittel nicht mehr mit Strom versorgt werden.

Zwar bieten die Hersteller dieser flachen OLED-Panels gesonderte Treiber an, die Schaltungen und elektronische Bauelemente enthalten, die eine Verwendung der OLED-Panels in Parallelschaltung bei Anschluss an diese Treiber ermöglichen. Jedoch sind diese Treiber in vergleichsweise großvolumigen Gehäusen untergebracht und ihre Installation erfordert daher häufig aufwändige Montagearbeiten. Wird beispielsweise eine Anzahl von OLED-Leuchtmitteln für die Ausleuchtung eines Raumes verwendet, sollte der Treiber aus optischen Gründen verdeckt untergebracht werden und muss dann dazu beispielsweise in eine abgehängte Decke eingebaut werden oder in einem anderen Raumbereich ist eigens eine Verkleidung nötig, um den Treiber zu kaschieren. Zudem kann in der Regel auch nur eine beschränkte Anzahl von OLED-Panels an einen solchen Treiber angeschlossen werden, so dass für weitere OLED-Panels ein zweiter Treiber notwendig ist.

In der DE 603 06 720 T2 wird eine OLED-Flächenbeleuchtungsvorrichtung beschrieben mit einer organischen Leuchtschicht zwischen einer Kathode und einer Anode auf einem Substrat sowie einer verkapselnden Abdeckung über der Leuchtschicht, wobei auf dem Substrat zwei Leiter angeordnet sind, die mit Anode und Kathode verbunden sind und die sich in den Bereich eines Zungenabschnitts des Substrats erstrecken. Mit diesem Zungenabschnitt kann man die OLED-Beleuchtungsvorrichtung in einen Beleuchtungssockel einsetzen. Die Verwendung mehrerer OLED-Flächenbeleuchtungsvorrichtungen dieser Art in einem gemeinsamen Beleuchtungssystem ist nur möglich, wenn Beleuchtungssockel verwendet werden, die passende Öffnungen zum Einstecken der OLED-Beleuchtungsvorrichtung aufweisen, so dass die einzelne OLED-Beleuchtungsvorrichtung in dem Beleuchtungssockel gehalten wird und der Kontakt zwischen OLED-Beleuchtungsvorrichtung und dem Beleuchtungssockel hergestellt wird. Es handelt sich somit um ein individuell konzipiertes System zur Kontaktierung flächiger OLED-Leuchtmittel, deren Kontaktierung nur in Verbindung mit spezifischen Beleuchtungssockeln möglich ist und daher keine breite Anwendbarkeit bietet.

In der US 2010/0045175 A1 wird ein Beleuchtungssystem beschrieben, bei dem man mehrere panelartige OLED-Leuchtmittel, die mit Kontakten versehen sind, in eine stromschienenartige Aufnahme einschieben kann, um so die Licht abgebende Fläche zu vergrößern. Die Anordnung der OLED-Leuchtmittel ist dabei so, dass sich der Verbinder in der Mitte befindet und die OLED-Panels von rechts oder links oder von der Stirnseite her eingeschoben werden, so dass jedes OLED-Panel immer eigene, diesem Panel zugeordnete Kontakte in der Stromschiene kontaktiert. Für zwei OLED-Leuchtmittel werden hier somit insgesamt vier Kontakte (jeweils für Anode und Kathode) benötigt. Es ist nicht vorgesehen und technisch auch nicht möglich, mehrere OLED-Panels nebeneinander an der gleichen Seite in die Stromschiene so einzuschieben, dass diese Panels die gleichen Kontakte der Stromschiene nutzen. Somit liegt hier keine Parallelanordnung der OLED-Panels im Sinne der vorliegenden Erfindung vor. Dies wäre technisch auch deshalb nicht möglich, da dann die Helligkeit der OLED-Panels untereinander variieren würde. Die OLED-Leuchtmittel sind hier einfache Platten, die nur das Leuchtmittel und die Kontakte umfassen und die keine integrierten elektronischen Bauelemente aufweisen, die für einen Betrieb der OLED-Leuchtmittel in Parallelschaltung an den gleichen Kontakten der Stromschiene erforderlich wären.

Hier setzt die vorliegende Erfindung an. Die Aufgabe der vorliegenden Erfindung besteht darin, ein Beleuchtungssystem umfassend ein Stromversorgungssystem sowie wenigstens ein OLED-Leuchtenmodul mit den Merkmalen der eingangs genannten Gattung zu schaffen, welches eine vielseitigere Nutzung von OLED-Leuchtenmodulen unmittelbar in Parallelschaltung in Verbindung mit beispielsweise anderen gleichartigen OLED-Leuchtenmodulen oder auch anderen Leuchtmitteln zulässt.

Die Lösung der vorgenannten Aufgabe liefert ein Beleuchtungssystem der eingangs genannten Art mit den Merkmalen des Anspruchs 1.

Erfindungsgemäß ist vorgesehen, dass das Stromversorgungssystem wenigstens eine Stromschiene umfasst mit einer schlitzartigen stromführenden Aufnahme, wobei in die schlitzartige Aufnahme der Stromschiene das OLED-Leuchtenmodul an beliebiger Stelle einschiebbar ist, derart, dass zwischen den Mitteln zur Stromversorgung des OLED-Leuchtenmoduls und stromführenden Elementen in der schlitzartigen Aufnahme der Stromschiene ein elektrischer Kontakt hergestellt wird.

Die im Rahmen des erfindungsgemäßen Beleuchtungssystems verwendeten OLED-Leuchtenmodule weisen in diese integrierte elektronische Bauelemente auf, die einen Betrieb des OLED-Leuchtenmoduls in Parallelschaltung ermöglichen und die OLED-Leuchtenmodule weisen von außerhalb kontaktierbare Mittel für die Stromversorgung auf, die einen unmittelbaren Anschluss des OLED-Leuchtenmoduls an eine Gleichspannungsquelle in Parallelschaltung ermöglichen.

Ein Vorteil des erfindungsgemäßen Beleuchtungssystems besteht darin, dass in diesem eine OLED-Leuchtenmodule mit einem standardisierten Kontaktierungssystem verwendet werden. Die Anzahl der jeweils für eine Leuchte verwendeten OLED-Leuchtenmodule (als Leuchtmittel) ist variabel. Es ist keine individuelle Kontaktierungslösung für die Leuchte selbst notwendig, die bei herkömmlichen Leuchten in der Regel immer auch die Anzahl der in der Leuchte verwendbaren OLED-Leuchtmittel begrenzt. Vielmehr können diese OLED-Leuchtenmodule in Verbindung mit standardisierten Stromversorgungssystemen wie Stromschienen, stromführenden Stangen oder Drähten verwendet werden, ähnlich wie bei herkömmlichen Niedervoltstrahlern, die sich an derartige Stromversorgungssysteme anklemmen lassen. Die erfindungsgemäße Lösung schafft somit vielseitige Anwendungsmöglichkeiten für OLED-Leuchtenmodule in Beleuchtungssystemen, da beispielsweise die Abstände der Leuchtmittel untereinander und deren Anzahl praktisch beliebig variiert werden können. Ein vorhandenes Beleuchtungssystem kann jederzeit durch Hinzufügung weiterer OLED-Leuchtenmodule dieser Art erweitert werden. Da bislang bei OLED-Leuchtmitteln allgemeine Standards fehlen, wird die erfindungsgemäße Standardisierung die Verbreitung und Akzeptanz von OLED-Leuchtmitteln fördern.

Die Erfindung verwendet somit in sich autarke OLED-Leuchtenmodule, welche entweder für sich allein bereits als vollständige Leuchte betrieben werden können, wobei deren beide Kontakte lediglich an die beiden Pole einer Gleichstromquelle angeschlossen werden müssen. Oder aber man kann auch eine Mehrzahl dieser OLED-Leuchtenmodule in Parallelschaltung in einem Beleuchtungssystem verwenden, ohne dass dazu ein zusätzlicher Treiber erforderlich ist. Erfindungsgemäß können somit OLED-Leuchtmittel in praktisch unbegrenzter Anzahl von einem Laien in einem Beleuchtungssystem miteinander kombiniert werden, ohne dass es dazu besonderer Fachkenntnisse oder Installationsarbeiten bedarf. Dies schafft vielfältigere Anwendungsmöglichkeiten, die zu einer besseren Akzeptanz von OLED-Leuchtenmodulen als Massenprodukten führen werden.

Bei Verwendung mehrerer OLED-Leuchtenmodule in einem Beleuchtungssystem kann ein einheitliches Gleichstrom führendes Stromversorgungssystem wie beispielsweise Stromschienen, stromführende Stangen, Drahtseile oder ähnliches verwendet werden, an welchem die erfindungsgemäßen OLED-Leuchtenmodule in beliebiger Anzahl an der jeweils gewünschten Stelle angebracht werden können.

Gegenstand der vorliegenden Erfindung ist weiterhin ein OLED-Leuchtenmodul zur Verwendung in einem Beleuchtungssystem der zuvor geschilderten Art, bei dem ein erster Kontakt der einen Polarität auf der einen Seite des flächigen OLED-Leuchtenmoduls und ein zweiter Kontakt der anderen Polarität auf der anderen gegenüberliegenden Seite, vorzugsweise in etwa über den Umfang des Leuchtenmoduls gesehen gegenüberliegend angeordnet ist.

In dem erfindungsgemäßen Beleuchtungssystem umfassend ein Gleichstrom führendes Stromversorgungssystem können ein oder mehrere OLED-Leuchtenmodule der erfindungsgemäßen Art parallel angeschlossen werden.

Die vorliegende Erfindung liefert somit unter Verwendung von nur einem handelsüblichen OLED-Panel ein OLED-Leuchtmittelmodul, welches bei Bedarf auch als vollständige Leuchte verwendbar ist, welches eine flache Bauform hat und welches sehr vielseitig in unterschiedlichsten Leuchtensystemen einsetzbar ist, also in Deckenleuchten, Wandleuchten, Stehleuchten, Tischleuchten, Bodenleuchten etc.

Gemäß einer ersten bevorzugten Ausführungsvariante der Erfindung sind die Mittel zur Stromversorgung in einem Randbereich des OLED-Leuchtenmoduls angeordnet und als nach außen hin vorstehende stiftartige oder steckerartige Kontakte ausgebildet. Kontakte dieser Art kann man beispielsweise in entsprechende Aufnahmen von Stromschienen oder Steckbuchsen einstecken. In der Regel werden die heute bekannten OLED-Leuchtmittel mit 12-24 V Gleichstrom betrieben, so dass auch nicht isolierte Stromschienen, stromführende Stangen, Drähte usw. eingesetzt werden können.

Gemäß einer zweiten bevorzugten Ausführungsvariante der Erfindung sind die Mittel zur Stromversorgung des OLED-Leuchtenmoduls in einem Randbereich des OLED-Leuchtenmoduls angeordnet und als segmentförmige Kontakte ausgebildet. Diese segmentförmigen Kontakte können beispielsweise in geeignete Aufnahmen eines Stromschienensystems oder eines anderen Stromversorgungssystems eingeschoben werden.

Gemäß einer dritten bevorzugten Ausführungsvariante der Erfindung sind die Mittel zur Stromversorgung als von einem Randbereich des OLED-Leuchtenmoduls her zugängliche innenliegende buchsenartige Kontakte ausgebildet. In diesem Fall kann die Kontaktierung des OLED-Leuchtenmoduls beispielsweise über Stecker oder dergleichen erfolgen, die in die genannten buchsenartigen Kontakte des OLED-Leuchtenmoduls einsteckbar sind.

Gemäß einer vierten bevorzugten Ausführungsvariante der Erfindung sind die Mittel zur Stromversorgung als auf der Oberseite des flächigen OLED-Leuchtenmoduls zugängliche Kontakte oder auf der Unterseite des flächigen OLED-Leuchtenmoduls zugängliche Kontakte ausgebildet sind oder ein erster Kontakt ist auf der Oberseite angeordnet und ein zweiter Kontakt ist auf der Unterseite angeordnet.

Bei allen vorgenannten Ausführungsvarianten können die Mittel zur Stromversorgung des OLED-Leuchtenmoduls auf unterschiedliche Arten und in verschiedenen Bereichen an dem OLED-Leuchtenmodul angeordnet sein. Beispielsweise können die Mittel zur Stromversorgung als Kontakte beider Polarität nebeneinander an einer Seite des flächigen OLED-Leuchtenmoduls angeordnet sein oder ein erster Kontakt der einen Polarität ist auf der einen Seite des flächigen OLED-Leuchtenmoduls und ein zweiter Kontakt der anderen Polarität ist auf der anderen, gegenüberliegenden Seite, vorzugsweise in etwa über den Umfang des Leuchtenmoduls gesehen gegenüberliegend, angeordnet.

Die letztgenannte Variante mit den Kontakten auf gegenüberliegenden Seiten kommt dann zur Anwendung, wenn das Stromversorgungssystem aus zwei voneinander beabstandeten stromführenden Stangen oder Drähten besteht. In diesem Fall wird das OLED-Leuchtenmodul zwischen den beiden stromführenden Stangen oder Drähten angebracht und an diesen gehalten.

Befinden sich hingegen die beiden Kontakte auf der gleichen Seite des OLED-Leuchtenmoduls, kann dieses an einer Stromschiene mit schlitzartiger stromführender Aufnahme einseitig auskragend angebracht werden.

Eine mögliche alternative Variante der vorliegenden Erfindung sieht vor, dass die Mittel zur Stromversorgung des OLED-Leuchtenmoduls als Lampensockel für eine genormte Lampenfassung, insbesondere eine Schraubfassung, Steckfassung, Bajonettfassung für herkömmliche Leuchtmittel für den Niedervoltbereich oder Hochvoltbereich ausgebildet sind. Dies können zum Beispiel Lampensockel für herkömmliche Lampenfassungen wie Glühlampen, LED-Lampen, Halogenlampen oder auch Leuchtstofflampen sein wie beispielsweise E27, E14 oder GU5,3 (Niedervoltbereich 12V) oder GU10 (230Volt-Bereich), so dass man ein erfindungsgemäßes OLED-Leuchtenmodul über eine herkömmliche Lampenfassung kontaktieren kann. Dies macht einen einfachen Austausch eines vorhandenen herkömmlichen Leuchtmittels gegen ein OLED-Leuchtenmodul möglich. Somit sind die Mittel zur Stromversorgung des OLED-Leuchtenmoduls mit herkömmlichen Lampenfassungen kompatibel.

Alternativ dazu können aber auch beispielsweise die Mittel zur Stromversorgung als Kontakte beider Polarität übereinander an einer Seite des flächigen OLED-Leuchtenmoduls angeordnet sein.

Gemäß einer bevorzugten Weiterbildung der Erfindung weist das OLED-Leuchtenmodul einen flachen sandwichartigen Aufbau auf mit mindestens einer Trägerplatte mit einer Licht abgebenden Seite und mindestens einer Deckplatte an der nicht Licht abgebenden Seite der Trägerplatte, wobei das flächige OLED-Leuchtmittel (OLED-Panel) zwischen Trägerplatte und Deckplatte angeordnet und mindestens an der Trägerplatte und/oder an der Deckplatte befestigt ist.

Bei dem vorgenannten sandwichartigen Aufbau kann beispielsweise das OLED-Panel auf der Trägerplatte und/oder auf der Deckplatte angeordnet oder in eine Ausnehmung der Trägerplatte und/oder eine Ausnehmung der Deckplatte eingelassen sein. In allen genannten Fällen ist ein besonders flacher Aufbau der Anordnung möglich.

Bei der Variante mit Deckplatte können die integrierten elektronischen Bauelemente für den Betrieb des OLED-Leuchtenmoduls in Parallelschaltung beispielsweise an der Trägerplatte oder an der Deckplatte angeordnet sein. Dies hat den Vorteil, dass ein flacher Aufbau der sandwichartigen Anordnung erhalten bleibt und die Platten bei der Fertigung vorkonfektioniert werden können, so dass in einem letzten Fertigungsschritt nur noch die Deckplatte und Trägerplatte zusammengefügt werden müssen.

Die vorgenannte Deckplatte kann aber auch entfallen, insbesondere dann, wenn das OLED-Panel schon so verkapselt ist, dass der OLED-Stack (die die Lichtabgabe erzeugenden Schichten, die Elektroden etc.) ausreichend gegen Witterungseinflüsse, Feuchtigkeit und Luftsauerstoff sowie mechanische Einflüsse geschützt sind. In diesem einfachen Fall besteht somit das OLED-Leuchtenmodul nur aus dem OLED-Panel, welches sich auf einer Trägerplatte befindet und Mitteln zur Stromversorgung des OLED-Leuchtenmoduls durch parallele Kontaktierung.

Bei den oben genannten erfindungsgemäßen Lösungsvarianten, bei denen die Mittel zur Stromversorgung der OLED-Leuchte in einem Randbereich der Trägerplatte vorstehend, seitlich über den Rand der Trägerplatte hinausragend, angeordnet sind, ist es möglich, eine OLED-Leuchte des erfindungsgemäßen Typs beispielsweise in schienenartige Aufnahmen einer Art Stromschienensystems einzuschieben. Auf diese Weise kann man beispielsweise auch mehrere dieser OLED-Leuchten in Parallelschaltung an ein Niedervoltsystem anschließen.

Bei den oben genannten erfindungsgemäßen Lösungsvarianten mit sandwichartigem Aufbau wird eine zweite von der Trägerplatte beabstandete Platte verwendet, die hierin in Abgrenzung zu der als erste Platte anzusehenden Trägerplatte als Deckplatte bezeichnet wird. Diese Deckplatte befindet sich an derjenigen Seite der Trägerplatte, die der Licht abgebenden Seite abgewandt ist, also quasi an der Rückseite der Licht abgebenden Fläche. Jedoch kann diese Deckplatte auch mindestens teilweise transluzent oder transparent ausgebildet sein, so dass man beispielsweise auch einen Lichtanteil zu dieser Rückseite hin abstrahlen kann. Das OLED-Panel befindet sich zwischen der Deckplatte und der Trägerplatte, so dass sich ein Sandwichaufbau ergibt. Die Kontaktmittel zur Kontaktierung des OLED-Panels befinden sich vorzugsweise an der Deckplatte.

Leiterbahnen, die zu diversen elektronischen Bauelementen führen, welche für den Betrieb des OLED-Panels benötigt werden, können auf die den OLED-Panels zugewandte Fläche der Deckplatte aufgebracht sein. Alternativ dazu können sie sich auch beispielsweise auf der Trägerplatte befinden.

Die vorgenannten elektronischen Bauelemente wie beispielsweise Widerstände, Elemente zur Schaffung einer Konstantstromquelle für das OLED-Leuchtmittel oder mit beispielsweise regelnder Funktion im Hinblick auf die Spannungszufuhr zu den OLED-Panels oder die Helligkeit (Dimmfunktion) oder die Farbwiedergabe der OLED-Leuchtmittel und dergleichen sind bei einer möglichen Variante der Erfindung vorzugsweise auf der Unterseite der Deckplatte angeordnet, was auch den Vorteil hat, dass die von diesen erzeugte Wärme nicht in nachteiliger Weise das OLED-Panel beeinflusst. Eine bereichsweise Erwärmung eines OLED-Panels durch externe Wärmequellen würde nämlich zu Schattenbildung und Verringerung der Lichtausbeute führen. Alternativ dazu können die notwendigen elektronischen Bauelemente oder auch nur einige davon gegebenenfalls auch auf der Trägerplatte untergebracht werden.

Die Ableitung der von dem OLED-Panel selbst erzeugten Wärme kann insbesondere über die Trägerplatte erfolgen, auf die das OLED-Panel aufgebracht ist, so dass zusätzliche Kühlelemente nicht notwendig sind.

Bei einer erfindungsgemäßen Leuchte hat die Trägerplatte beispielsweise einen runden, quadratischen, rechteckigen, dreieckigen oder polygonalen Umriss. Es ist weiterhin vorteilhaft, wenn die Deckplatte-so vorhanden- einen ähnlichen Umriss und in etwa Abmessungen hat, die denjenigen der Trägerplatte entsprechen. Das OLED-Panel ist bevorzugt auf der Trägerplatte befestigt und befindet sich innerhalb des Umrisses von Deckplatte und Trägerplatte. Die Mittel zur Stromversorgung der OLED-Leuchte stehen bei einigen der bevorzugt möglichen Ausführungsvarianten gegenüber dem Umfang der Trägerplatte und dem der Deckplatte nach außen ragend vor, so dass sie bei Einschieben der Leuchte in ein Stromschienensystem in die stromführenden Aufnahmen der Stromschiene eingreifen und so den elektrischen Kontakt herstellen.

Eine bevorzugte Weiterbildung der Erfindung sieht vor, dass zwischen Trägerplatte und Deckplatte ein Abstandsring als Abstandshalter angeordnet ist. Dieser Abstandsring schafft zum einen einen Abstand zwischen Trägerplatte und Deckplatte, der in etwa der Aufbauhöhe des zwischen Trägerplatte und Deckplatte liegenden OLED-Panels entsprechen kann. Zum anderen dichtet der Abstandsring auch umlaufend am Rand der Sandwichanordnung ab, verschließt so den Zwischenraum zwischen Trägerplatte und Deckplatte und schützt das OLED-Panel gegen mechanische Einflüsse und Witterungseinflüsse. Der Abstandsring kann das OLED-Panel ringsum umgreifen. Trägerplatte und Deckplatte weisen zwar bei einer solchen Ausführungsvariante eine geringfügig größere Fläche auf als das Licht abgebende OLED-Panel, jedoch ist dieser Flächenunterschied nur gering, so dass der weit überwiegende Flächenbereich der Trägerplatte als Leuchtfläche dienen kann. Zudem kann der Abstandsring vergleichsweise schmal ausgebildet sein. Um die Kontakte (Mittel für die Stromversorgung des OLED-Leuchtenmoduls) im Randbereich der Trägerplatte nach außen zu führen, kann der Abstandsring beispielsweise entsprechende Aussparungen aufweisen, um die Kontakte dort hindurch zu führen.

Die vorgenannten Mittel für die Stromversorgung des OLED-Leuchtenmoduls, die sich im Randbereich der Trägerplatte befinden und von dieser nach außen ragen, (d.h. die Kontakte der Leuchte nach außen hin, nicht zu verwechseln mit den Kontaktelementen des OLED-Panels) können gemäß einer bevorzugten Weiterbildung der Erfindung beispielsweise stiftartig, steckerartig oder auch segmentförmig ausgebildet sein. Die Kontakte für die beiden Pole können jeweils nebeneinander oder auch übereinander angeordnet sein oder aber sie liegen an gegenüberliegenden Seiten des OLED-Moduls.

Vorzugsweise besteht die Deckplatte aus Glas oder Kunststoff. Grundsätzlich kann die Deckplatte jedoch auch aus anderen Materialien wie beispielsweise Metall bestehen und sie muss auch nicht transparent oder lichtdurchlässig sein, solange ein Lichtaustritt nur über die Licht abgebende Fläche der Trägerplatte vorgesehen ist.

Die Trägerplatte besteht bevorzugt aus Glas oder Kunststoffglas und ist lichtdurchlässig, d.h. entweder transluzent oder transparent. Sie kann beispielsweise satiniert oder bedruckt, geätzt, gesandstrahlt, beklebt oder beschichtet sein oder im Inneren eine Fehlstruktur aufweisen, um eine Licht streuende Wirkung zu erzielen. Sie kann auch beispielsweise an einer ihrer Oberflächen eine Mikrolinsenstruktur oder eine Mikroprismenstruktur aufweisen, um eine Licht lenkende Wirkung zu erzielen. Die Trägerplatte kann auch beispielsweise mehrfach bedruckt sein mit einem Punktraster, Strichraster oder dergleichen. Sie kann auch beispielsweise eine mehrfache Bedruckung mit unterschiedlichen Pigmenten, beispielsweise keramischen Pigmenten oder dergleichen aufweisen.

Die Befestigung des OLED-Panels kann beispielsweise dadurch erfolgen, dass dieses auf die Trägerplatte oder auch ggf. auf die Deckplatte aufgeklebt wird. Das OLED-Panel kann auch beispielsweise in eine Ausnehmung der Trägerplatte und/oder der Deckplatte eingelassen sein, wodurch sich ein noch flacherer Aufbau der Sandwichanordnung ergeben kann.

Die erfindungsgemäße Lösung führt zu parallel anschließbaren Leuchtenmodulen mit einheitlichen, nicht durch Rahmen oder dergleichen unterbrochenen Leuchtflächen unter Verwendung von Leuchtmitteln in Form am Markt in Standardausführung erhältlicher OLED-Panels. Die erfindungsgemäßen Leuchtenmodule sind konstruktiv vergleichsweise einfach aufgebaut, haben ein ansprechendes Design, insbesondere da sie sehr flach sind und klare, auf das Wesentliche reduzierte Formen verwendet werden können. Weiterhin genügen die Leuchtenmodule auch den übrigen zuvor genannten technischen Anforderungen.

An dieser Stelle ist anzumerken, dass ein erfindungsgemäßes OLED-Leuchtenmodul, da es autark ist, eine in sich tragende Konstruktion aufweist und ein ästhetisch ansprechendes Design aufweist, im einfachsten Fall auch direkt als OLED-Leuchte verwendet werden kann. Um die Stromversorgung zu gewährleisten kann man es an ein Stromversorgungssystem anschließen, welches für OLED-Leuchtmittel geeigneten Gleichstrom (in der Regel 12-24 Volt Gleichspannung) liefert oder über einen Stecker und einen geeigneten Adapter(Netzteil) kann man das OLED-Leuchtenmodul auch an eine Netzsteckdose anschließen, oder man verwendet einen Stecker, welchen man in eine Buchse des OLED-Leuchtenmoduls einsteckt.

Bei einer möglichen bevorzugten Ausführungsvariante bestehen im Prinzip die erfindungsgemäßen OLED-Leuchtenmodule aus der Trägerplatte, über deren eine Fläche das Licht abgegeben wird, gegebenenfalls der Deckplatte, die mit den Leiterbahnen, elektronischen Bauelementen und Kontaktelementen vorkonfektioniert werden kann und den OLED-Panels, die quasi sandwichartig zwischen der Trägerplatte und der Deckplatte angeordnet sind.

Die verwendeten OLED-Panels können sehr flach ausgebildet sein und beispielsweise eine Materialstärke von weniger als 2 mm aufweisen. Entsprechend gering ist der Abstand zwischen Trägerplatte und Deckplatte. Die OLED-Panels können auch noch dünner sein, wenn beispielsweise folienartige OLED-Leuchtmittel verwendet werden. Derartige folienartige OLED-Leuchtmittel sollen aus Gründen der sprachlichen Vereinfachung ausdrücklich von dem hierin verwendeten Begriff "OLED-Panel" erfasst sein, auch wenn sie nicht plattenförmig sondern folienartig und im Ausgangszustand flexibel ausgebildet sind. Derartige folienartige OLED-Leuchtmittel können eine Materialstärke in einem Bereich von nur wenigen zehntel Millimetern aufweisen, zum Beispiel von etwa 0,2 mm oder weniger. Trägerplatte und Deckplatte können eine Materialstärke von beispielsweise jeweils im mm-Bereich haben, je nach Anforderung an die mechanische Belastbarkeit des OLED-Leuchtenmoduls, so dass sich bei einem solchen Aufbau eine sehr geringe Gesamt-Aufbauhöhe ergibt.

Bei einem beispielhaften erfindungsgemäßen OLED-Leuchtenmodul kann die Kontaktierung des OLED-Panels innerhalb der Leuchte vorzugsweise über dem OLED-Panel zugeordnete Kontaktelemente, insbesondere Kontaktfedern, auf der der der Trägerplatte zugewandten Seite der Deckplatte erfolgen, so dass diese bei der Montage der OLED-Leuchte beim Aufsetzen der Deckplatte auf die Trägerplatte, auf der das OLED-Panel befestigt ist, jeweils einen Pol des OLED-Panels kontaktieren.

Für die elektrische Zuleitung zu den Kontaktelementen, die das OLED-Panel kontaktieren, kann man beispielsweise auf die Deckplatte (oder auch auf die Trägerplatte) aufgedruckte Leiterbahnen verwenden, wobei diese Technik der aufgedruckten Leiterbahnen aus anderen Bereichen der Lichttechnik an sich bekannt ist.

Vorteilhaft bei einem erfindungsgemäßen OLED-Leuchtenmodul ist auch, dass dieses mit sehr wenigen funktionellen Bauteilen auskommt und die Art der Leuchtmittel und deren Kontaktierung einen extrem flachen Aufbau des Leuchtenmoduls ermöglicht. Man kann beispielsweise eine dünne Trägerplatte aus Glas oder Kunststoffglas verwenden, auf die man unmittelbar die sehr flachen OLED-Panels aufbringt, die nur eine Materialstärke von beispielsweise im 1 bis 2 mm-Bereich aufweisen. Die erfindungsgemäßen Leuchtenmodule benötigen anders als bisher bekannte Lösungen weder Rahmenelemente noch Gehäuseelemente, noch sind Fassungen für die OLED-Leuchtmittel im klassischen Sinne notwendig.

Die Kontaktelemente, insbesondere Kontaktfedern, können beispielsweise auf Leiterbahnen der Deckplatte aufgelötet oder aufgeklebt werden.

An dieser Stelle muss auf einen wichtigen Unterschied zu dem eingangs genannten Stand der Technik hingewiesen werden. Einige am Markt erhältliche OLED-Panels wie beispielsweise das OLED-Panel der Fa. OLEDWorks, Modell Lumiblade Brite FL300, umfassen selbst zumeist bereits eine untere Trägerplatte aus Glas und eine obere Verkapselung aus Glas, die die OLED-Schicht schützt, so dass sich ein sandwichartiger Aufbau ergibt, bei dem der OLED-Stack zwischen zwei Glasplatten liegt, die allerdings sehr dünn sind, beispielsweise im Bereich von etwa 1 mm oder weniger, da die gesamte Materialstärke des OLED-Panels in der Regel etwa 2 bis 3 mm beträgt. Zur Materialstärke des Aufbaus trägt dabei noch der Rahmen bei, der die dünnen Glasplatten des Sandwichaufbaus ringsum einfasst. Eine schematisch vereinfachte Zeichnung eines solchen Aufbaus eines OLED-Panels der Fa. Philips findet sich in der WO 2011/030283 A2. Das dort beschriebene OLED-Panel kann gegebenenfalls zu beiden Seiten hin Licht abgeben, d.h. sowohl durch das untere transparente Substrat hindurch als auch nach oben hin durch die ebenfalls transparente Abdeckung zur Verkapselung. Das vorgenannte transparente Substrat dient in dem Leuchtmittel als Träger für den OLED-Stack. Dieser Träger des OLED-Leuchtmittels selbst ist jedoch nicht zu verwechseln mit der in der vorliegenden Erfindung verwendeten lichtdurchlässigen Trägerplatte aus Glas oder Kunststoff. Hier handelt es sich um die Trägerplatte der Leuchte auf die das OLED-Panel aufgebracht wird. Die erfindungsgemäße Trägerplatte hat vorzugsweise tragende Funktion für das gesamte Leuchtenmodul, d.h. sie ist so ausgebildet, dass man das Leuchtenmodul auch beispielsweise in ein Stromschienensystem einschieben oder an stromführenden Stangen oder Drähten befestigen kann. Alle wesentlichen Bauelemente des erfindungsgemäßen Leuchtenmoduls, die nicht auf oder an dieser Trägerplatte angebracht werden, können an der Deckplatte angeordnet sein, so dass bei der Montage durch sandwichartiges zusammenfügen von Trägerplatte und Deckplatte das Leuchtenmodul erstellt werden kann.

Ein weiterer wichtiger Aspekt der vorliegenden Erfindung liegt darin, dass man die Trägerplatte (und gegebenenfalls auch die Deckplatte) des OLED-Leuchtenmoduls so ausbilden kann, dass sie das von den Leuchtmitteln abgegebene Licht optisch beeinflusst und gleichmäßiger verteilt, so dass man eine Lichtabgabefläche mit einer weitgehend einheitlichen Lichtabgabe erhält, die eine leuchtende Gesamtfläche darstellt.

Um den abgegebenen Lichtstrom zu beeinflussen und eine definierte möglichst gleichmäßige Lichtabgabe über einen relevanten Bereich der Trägerplatte (gegebenenfalls die gesamte Trägerplatte) zu erreichen, ist gemäß einer bevorzugten Weiterbildung der Erfindung die Trägerplatte an ihrer Licht abstrahlenden Seite mindestens in Teilbereichen mattiert, insbesondere durch Ätzen, Sandstrahlen, Schleifen, Lasern oder dergleichen. Dadurch kann man eine gleichmäßigere Lichtverteilung erzielen. Das Licht wird dann nicht nur in der exakt der Leuchtfläche des OLED-Panels entsprechenden Bereichen abgestrahlt, sondern quasi die gesamte Fläche der Trägerplatte an ihrer Licht abgebenden Seite kann Licht abstrahlend sein.

Alternativ zu einer Veränderung der Lichtabstrahlcharakteristik der Trägerplatte durch deren Behandlung an der Oberfläche durch eine der hierin genannten Methoden, vorderseitig und/oder rückseitig, kann man auch beispielsweise in die Trägerplatte Streupartikel einarbeiten, die eine vergleichbare Wirkung entfalten, eine gleichmäßigere Lichtabgabe bewirken und die Ausbildung von dunkleren Zonen im Randbereich der Trägerplatte, der die Fläche des OLED-Panels ja geringfügig überragt, verhindern.

An der der Licht abstrahlenden Seite abgewandten Rückseite kann beispielsweise die Trägerplatte mindestens in Teilbereichen beschichtet oder bedruckt sein, um die Lichtabstrahlcharakteristik oder die Lichtfarbe zu verändern, oder um beispielsweise eine Lichtabgabe oder eine veränderte Lichtabgabe nur in selektiven Flächenbereichen zu erzielen. Eine solche Beschichtung kann teilweise lichtdurchlässig sein und deren Aufbringung kann durch Bedruckung beispielsweise durch Siebdruck oder Digitaldruck oder andere geeignete Druckverfahren erfolgen.

Alternativ dazu kann die Beschichtung mittels einer der gängigen im Stand der Technik bekannten Methoden zur Aufbringung dünner Schichten erfolgen, beispielsweise durch Vakuum-Beschichtung, Verdampfung (PVD), Sputtern, Plasmabeschichtung, Gasphasenabscheidung (CVD), Sol-Gel-Abscheidung, Schleuderbeschichtung, Walzenauftrag, Sprühen, Tauschbeschichtung etc.

Man kann beispielsweise eine selektive Lichtstreuung in bestimmten Flächenbereichen durch Bedrucken, Lasern, Sandstrahlen, Schleifen, Fräsen, Ätzen oder dergleichen erzielen, um dort eine erhöhte Lichtauskopplung zu bewirken. Eine Beschichtung der Trägerplatte an der der Lichtabgabe abgewandten Seite kann in definierten Flächenbereichen erfolgen, zum Beispiel zur Aufbringung einer bereichsweisen Verspiegelung.

Durch die Bedruckung oder Beschichtung kann man erreichen, dass sich im ausgeschalteten Zustand der Bereich oder die Bereiche, in welchen sich die sichtbare Lichtaustrittsfläche der OLED-Panels befinden bzw. befinden, in ihrer Farbe und/oder in ihrem Erscheinungsbild nur wenig von dem restlichen Bereich der Trägerplatte unterscheiden und man somit eine weitgehend homogen erscheinende sichtbare Fläche erhält, welche eine ansprechende optische Erscheinung der erfindungsgemäßen Leuchte gewährleistet.

Mögliche Leuchtenvarianten, bei denen ein OLED-Leuchtenmodul nach dem erfindungsgemäßen Prinzip verwendbar ist, sind zum Beispiel eine Hängeleuchte, Deckenanbauleuchte, Deckeneinbauleuchte, Wandanbauleuchte, Wandeinbauleuchte, Stehleuchte oder Tischleuchte.

Weitere alternative Varianten der erfindungsgemäßen OLED-Leuchten können zum Beispiel Bodeneinbauleuchten, Spiegelleuchten, Möbelleuchten oder beleuchtbare Möbelelemente, mobile Leuchten, Außenleuchten, Straßenleuchten, Orientierungsleuchten, Hinweisleuchten, oder Leuchten für eine Notbeleuchtung sein.

Gemäß der vorliegenden Erfindung kann das genannte OLED-Leuchtenmodul selbst eine Leuchte sein oder ein Hinweisschild oder ein Display oder das OLED-Leuchtenmodul stellt einen Teil eines der genannten Gegenstände dar.

Das erfindungsgemäße Beleuchtungssystem umfasst wenigstens ein Gleichstrom führendes Stromversorgungssystem, wobei an diesem Stromversorgungssystem wenigstens ein OLED-Leuchtenmodul mit den zuvor geschilderten Merkmalen anbringbar ist, derart, dass zwischen den Mitteln zur Stromversorgung des OLED-Leuchtenmoduls und stromführenden Elementen des Stromversorgungssystems ein elektrischer Kontakt hergestellt wird.

Eine mögliche beispielhafte Variante dieses Beleuchtungssystem umfasst wenigstens eine Stromschiene mit einer schlitzartigen stromführenden Aufnahme, wobei in die schlitzartige Aufnahme der Stromschiene wenigstens ein OLED-Leuchtenmodul mit den zuvor beschriebenen Merkmalen einschiebbar ist, derart, dass zwischen den Mitteln zur Stromversorgung des OLED-Leuchtenmoduls und stromführenden Elementen in der schlitzartigen Aufnahme der Stromschiene ein elektrischer Kontakt hergestellt wird.

Andere alternative Stromversorgungssysteme für die erfindungsgemäßen OLED-Leuchtenmodule sind beispielsweise stromführende Stangen oder Drähte, oder insbesondere für einzelne OLED-Leuchtenmodule entsprechend adaptierte Stecker oder Buchsen.

Im bevorzugten Fall umfasst das Beleuchtungssystem ein Stromversorgungssystem, in oder an dem zwei elektrische Leiter für die Kontakte beider Pole des OLED-Leuchtenmoduls angeordnet sind und das OLED-Leuchtenmodul wird einseitig mit einem Randbereich oder auch mittig an dem Stromversorgungssystem angebracht. Bei einer Stromschiene wird das OLED-Leuchtenmodul zum Beispiel in diese Stromschiene eingeschoben, wobei sich in dem eingeschobenen Randbereich des Leuchtenmoduls die Kontakte beider Pole des Leuchtenmoduls befinden. Bei dieser Variante befinden sich also beide Kontakte des Leuchtenmoduls an dessen einer Seite. Das OLED-Leuchtenmodul wird vorzugsweise so in die Stromschiene eingeschoben, dass es unter einer gewissen Klemmwirkung einseitig auskragend in der Stromschiene gehalten wird.

Es können aber auch bei einem solchen Beleuchtungssystem alternativ beispielsweise zwei zueinander beabstandete Stromschienen, Stangen oder Drähte vorgesehen sein und das OLED-Leuchtenmodul wird dann mit zwei gegenüber liegenden randseitigen Bereichen gleichzeitig in beide Stromschienen eingeschoben oder an beiden Stangen oder Drähten angebracht, wobei sich bei dieser Variante die beiden Kontakte an gegenüber liegenden Seiten des OLED-Leuchtenmoduls befinden und eine elektrische Verbindung zwischen jeweils einem der Kontakte und jeweils einem Leiter einer Stromschiene, einer Stange oder einem Draht hergestellt wird.

Bei allen vorgenannten Alternativen können bevorzugt in der Längsrichtung der einen Stromschiene oder beider Stromschienen, Stangen oder Drähte hintereinander zwei oder mehrere OLED-Leuchtenmodule mit den vorgenannten Merkmalen anbringbar sein. Dies eröffnet die Möglichkeit, mehrere OLED-Leuchtenmodule dieses Typs (oder andere ähnliche Leuchtemodule) in Parallelschaltung elektrisch anzuschließen.

Das Beleuchtungssystem kann beispielsweise für Innenleuchten verwendet werden, insbesondere für Pendelleuchten, Hängeleuchten, Deckenanbauleuchten, Deckeneinbauleuchten, Wandanbauleuchten, Wandeinbauleuchten, Stehleuchten oder Tischleuchten, oder ein OLED-Leuchtenmodul der zuvor beschriebenen Art ist Teil einer solchen Innenleuchte, oder das Beleuchtungssystem bildet ein Leuchtregal, Leuchtpanel, elektrisches Gerät, Haushaltsgerät, Stadtraummöbel, Fassadenelement, Wandelement, Deckenelement, eine Außenleuchte eines Kraftfahrzeugs oder eine Einbaueinrichtung eines Kraftfahrzeugs, Schienenfahrzeugs, Schiffs oder Flugzeugs, oder ist ein beleuchtbarer Teil eines solchen Gegenstands.

Die in den Unteransprüchen genannten Merkmale beziehen sich auf bevorzugte Ausführungsformen der Erfindung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine schematisch vereinfachte perspektivische Explosionsansicht eines ersten beispielhaften erfindungsgemäßen OLED-Leuchtenmoduls;
Figur 2 eine schematisch vereinfachte perspektivische Explosionsansicht eines zweiten beispielhaften erfindungsgemäßen OLED-Leuchtenmoduls;
Figur 3 eine schematisch vereinfachte perspektivische Explosionsansicht eines dritten beispielhaften erfindungsgemäßen OLED-Leuchtenmoduls;
Figur 4 eine schematisch vereinfachte perspektivische Explosionsansicht eines vierten beispielhaften erfindungsgemäßen OLED-Leuchtenmoduls;
Figur 5 eine schematisch vereinfachte Draufsicht auf die Unterseite einer ersten beispielhaften Ausführungsvariante des Leuchtenmoduls von Figur 1;
Figur 6 eine schematisch vereinfachte Draufsicht auf die Unterseite einer zweiten beispielhaften Ausführungsvariante eines erfindungsgemäßen Leuchtenmoduls;
Figur 7 eine schematisch vereinfachte Draufsicht auf die Unterseite einer weiteren beispielhaften Ausführungsvariante eines erfindungsgemäßen Leuchtenmoduls;
Figur 8 eine schematisch vereinfachte Draufsicht auf die Unterseite einer weiteren beispielhaften Ausführungsvariante eines erfindungsgemäßen Leuchtenmoduls;
Figur 9 eine schematisch vereinfachte Draufsicht auf die Unterseite einer weiteren beispielhaften Ausführungsvariante eines erfindungsgemäßen Leuchtenmoduls;
Figur 10 eine schematisch vereinfachte Draufsicht auf die Unterseite einer weiteren beispielhaften Ausführungsvariante eines erfindungsgemäßen Leuchtenmoduls;
Figur 11 eine schematisch vereinfachte Draufsicht auf die Unterseite einer weiteren beispielhaften Ausführungsvariante eines erfindungsgemäßen Leuchtenmoduls;
Figur 12 eine schematisch vereinfachte Draufsicht auf die Unterseite einer weiteren beispielhaften Ausführungsvariante eines erfindungsgemäßen Leuchtenmoduls;
Figur 13 eine schematisch vereinfachte Schnittansicht eines beispielhaften Stromschienensystems mit einem in dieses einschiebbaren erfindungsgemäßen OLED-Leuchtenmodul;
Figur 14 eine perspektivische Ansicht mit einer beispielhaften Stromschiene und mehreren erfindungsgemäßen OLED-Leuchtenmodulen, die in diese Stromschiene einschiebbar sind;
Figur 15 eine weitere perspektivische Ansicht mit einem anderen beispielhaften Stromschienensystem, an dem OLED-Leuchtenmodule anbringbar sind;
Figur 16 eine weitere perspektivische Ansicht eines beispielhaften erfindungsgemäßen Beleuchtungssystems;
Figur 17 eine perspektivische Ansicht einer weiteren Variante eines beispielhaften erfindungsgemäßen Beleuchtungssystems.

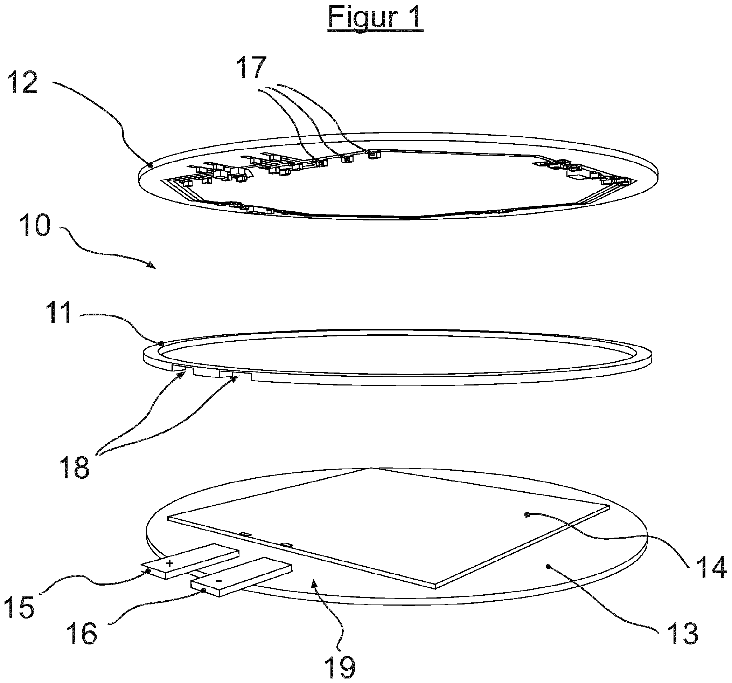

Zunächst wird auf die Figuren Bezug 1 und 5 genommen und anhand dieser wird der prinzipielle Aufbau eines ersten beispielhaften erfindungsgemäßen OLED-Leuchtenmoduls nachfolgend näher erläutert. Dieses OLED-Leuchtenmodul umfasst eine Trägerplatte 13, auf der ein flaches OLED-Panel 14 befestigt wird, zum Beispiel durch Aufkleben. In dem Ausführungsbeispiel ist die Trägerplatte 13 im Umriss rund, während das OLED-Panel 14 im Umriss rechteckig, insbesondere etwa quadratisch ist, wodurch sich Randbereiche 19 der Trägerplatte 13 ergeben, in denen kein OLED-Panel 14 aufliegt. In diesen Randbereichen 19 können beispielsweise flache stiftartige Kontakte 15, 16 auf der Trägerplatte 13 angebracht werden, über die das OLED-Leuchtenmodul von außen her mit Strom versorgt wird. Wie man in Figur 1 erkennt, sind diese stiftartigen Kontakte so lang ausgebildet, dass sie den äußeren Rand der Trägerplatte 13 nach außen hin beispielsweise in etwa radialer Richtung überragen und somit stehen die Kontakte 15, 16 bei montiertem OLED-Leuchtenmodul jeweils ein Stück nach außen hin vor.

Das OLED-Leuchtenmodul 10 umfasst weiterhin eine Deckplatte 12, an deren Unterseite sich diverse elektronische Bauelemente 17 befinden sowie Kontaktelemente, über die sich innerhalb des Leuchtenmoduls die Pole des OLED-Panels 14 kontaktieren lassen. Außerdem sind auf die Unterseite der Deckplatte 12 Leiterbahnen aufgebracht, vorzugsweise aufgedruckt, über die diverse elektronische Bauelemente 17 verbunden werden und der Strom verteilt werden kann. In dem Ausführungsbeispiel hat die Deckplatte 12 ebenfalls einen runden Umriss und entspricht in ihren Abmessungen in etwa der Trägerplatte 13.

Zwischen Trägerplatte 13 und Deckplatte 12 befindet sich ein entsprechend dem Durchmesser der beiden vorgenannten Bauteile dimensionierter Abstandsring 11, der bei montiertem Leuchtenmodul um die Eckbereiche des OLED-Panels herum verläuft und dieses einfasst und auch den Zwischenraum zwischen Trägerplatte 13 und Deckplatte in deren Umfangsrandbereich verschließt. Dieser Abstandsring 11 kann zwei nebeneinander liegende Aussparungen 18 im Bereich seines Umfangs haben, durch die hindurch man die beiden stiftartigen Kontakte 15, 16 führen kann. Im montierten Zustand liegen die Trägerplatte 13, der Abstandsring 11 und die Deckplatte 12 sandwichartig übereinander und bilden so ein flaches OLED-Leuchtenmodul 10 mit nach außen ragenden Kontakten 15, 16, über die die Stromversorgung des Leuchtenmoduls erfolgen kann.

Die Trägerplatte 13 ist zumindest in dem Bereich, in dem das Licht nach unten hin abgegeben wird, lichtdurchlässig (transluzent oder transparent) und besteht aus Glas oder Kunststoffglas, so dass das von dem OLED-Panel 14 abgegebene Licht über die unterseitige Fläche der Trägerplatte 13 nach unten hin abgegeben werden kann. Gegebenenfalls kann auch die Deckplatte 12 in dem mittleren Bereich, in dem sich keine elektronischen Bauelemente 17 befinden (siehe Figur 1), lichtdurchlässig sein, so dass man bei dem erfindungsgemäßen Leuchtenmodul auch einen Teil des Lichts durch die Deckplatte hindurch (in diesem Fall nach oben hin) abstrahlen kann.

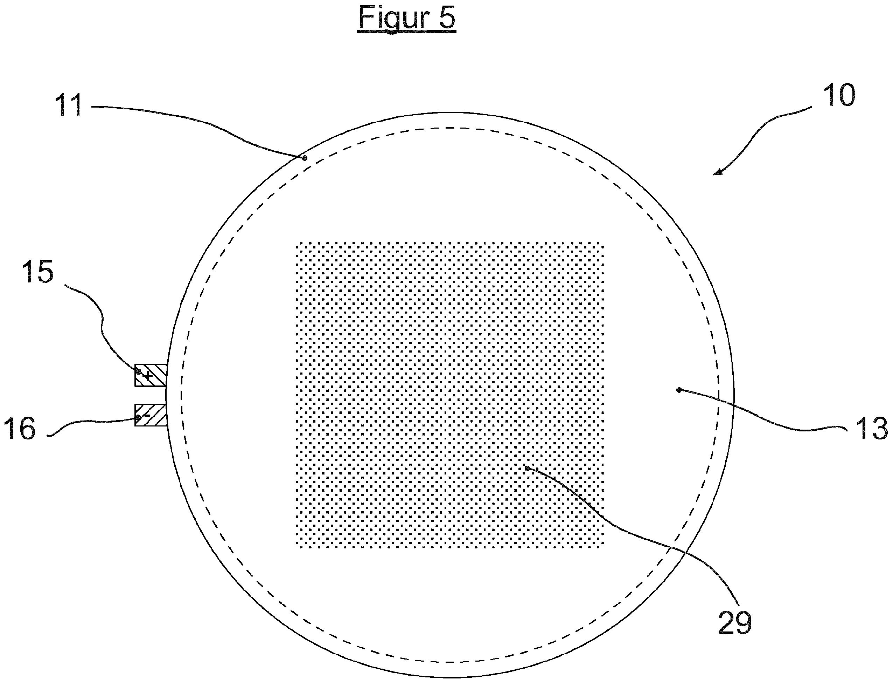

Figur 5 zeigt schematisch vereinfacht eine Draufsicht auf ein erfindungsgemäßes Leuchtenmodul von der Unterseite her gesehen, wobei hier die nach außen hin ragenden Kontakte 15, 16 stiftartig ausgebildet sind und nebeneinander liegen wie in dem Ausführungsbeispiel gemäß Figur 1. Man sieht in Figur 5 auch die Lichtfläche 29, in deren Bereich das OLED-Panel 14 sein Licht in die Trägerplatte 13 hinein abstrahlt und nach unten hin abgibt. Jedoch kann man die Trägerplatte durch geeignete Streumittel so ausbilden, dass sich das Licht praktisch über die gesamte Fläche der Trägerplatte 13 verteilt und nicht nur in den Bereichen nach untenhin abgegeben wird, in denen sich oberseitig auf der Trägerplatte 13 das OLED-Panel 14 befindet.

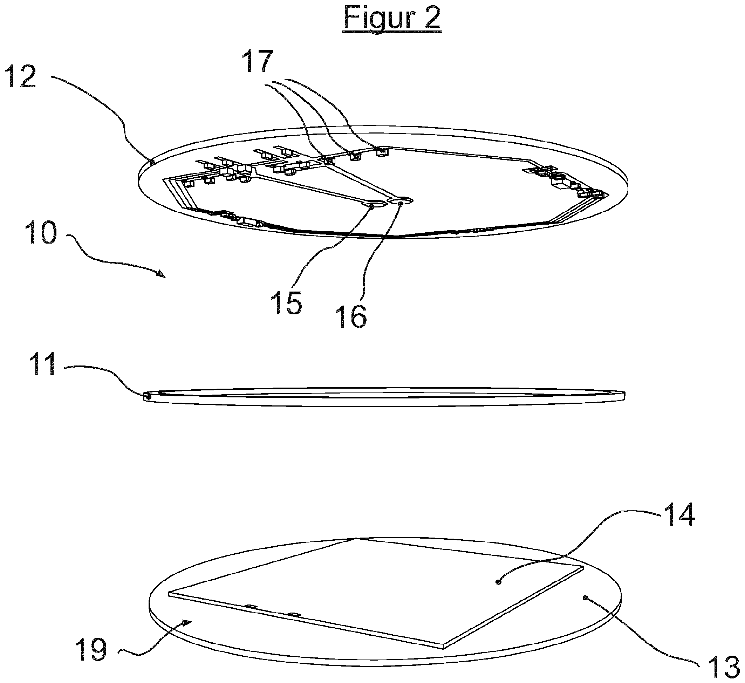

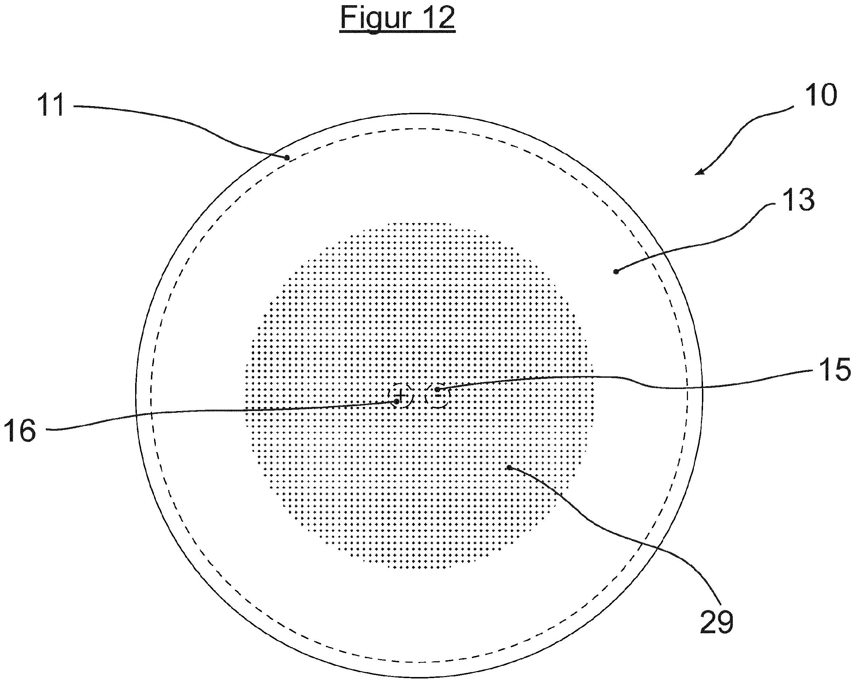

Figur 2, auf die nachfolgend Bezug genommen wird, zeigt eine Variante eines erfindungsgemäßen OLED-Leuchtenmoduls 10, bei dem anders als bei der Variante von Figur 1 die beiden Kontakte 15, 16, über die das Leuchtenmodul kontaktiert wird, nicht auf der Trägerplatte 13 angeordnet sind, sondern sich im oberen Bereich des Leuchtenmoduls, beispielsweise an der Deckplatte 12 befinden. Weiterhin ragen bei der Variante von Figur 2 die beiden Kontakte 15, 16 nicht über den Umfang des Leuchtenmoduls nach außen hin, sondern befinden sich in einem zentrischen Bereich, in dem die Deckplatte 12 eine Ausnehmung hat, so dass die Leuchte dort kontaktiert werden kann, so wie dies beispielsweise in Figur 12 dargestellt ist. Somit kann das montierte OLED-Leuchtenmodul 10 von der Seite her (wie in den Figuren 1 und 5) oder auch in einem mittigen Bereich, insbesondere von der Oberseite her (siehe Figuren 2 und 12) kontaktiert werden. Eine Kontaktierung von der Unterseite her wäre grundsätzlich auch möglich, ist aber dann ungünstig, wenn wie in Figur 12 die Lichtabgabe nach unten hin erfolgt.

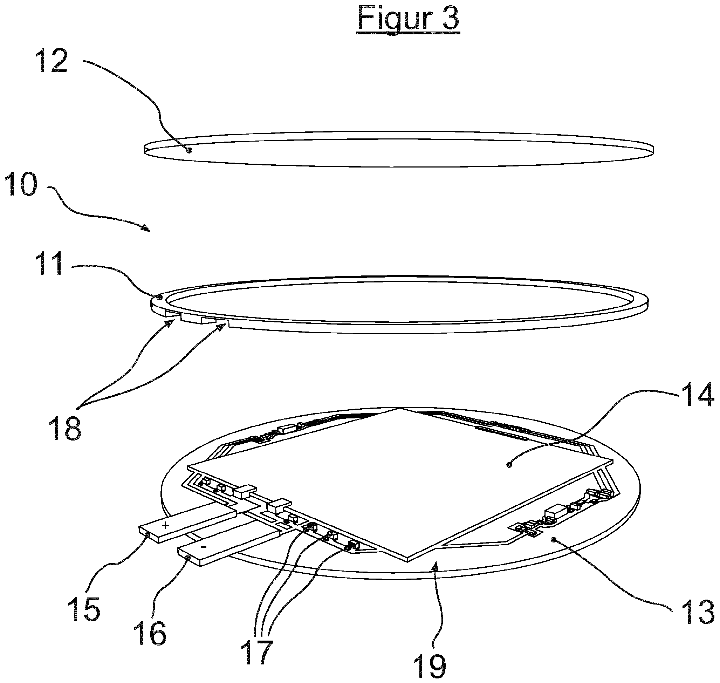

Figur 3 zeigt eine weitere Alternative zu den Varianten gemäß den Figuren 1 und 2, bei der sich nicht nur die Kontakte 15, 16, sondern auch die elektronischen Bauelemente 17 und gegebenenfalls Leiterbahnen für deren Verbindung auf der Trägerplatte 13 befinden. Dies ist anders gelöst als bei der Variante von Figur 1, wo sich die elektronischen Bauelemente 17 und die Leiterbahnen an der Deckplatte 12 befinden. Wie Figur 3 zeigt, kann auch bei dieser Variante das OLED-Panel 14 ebenfalls auf der Trägerplatte 13 liegen, beispielsweise oberhalb der Leiterbahnen und in diesem Fall befestigt nicht durch eine Klebeverbindung sondern eine Klemmverbindung.

Es ist auch eine alternative Variante mit Abstandsring 11 ähnlich wie in Figur 3 möglich, bei der jedoch das OLED-Panel 14 nur formschlüssig im Abstandsring 11 liegt, wobei dieser zum Beispiel entsprechende eckige Aussparungen hat. In diesem Fall muss das OLED-Panel 14 nicht eingeklebt werden, so dass die Möglichkeit besteht, das OLED-Panel später beispielsweise bei einem Defekt auszutauschen.

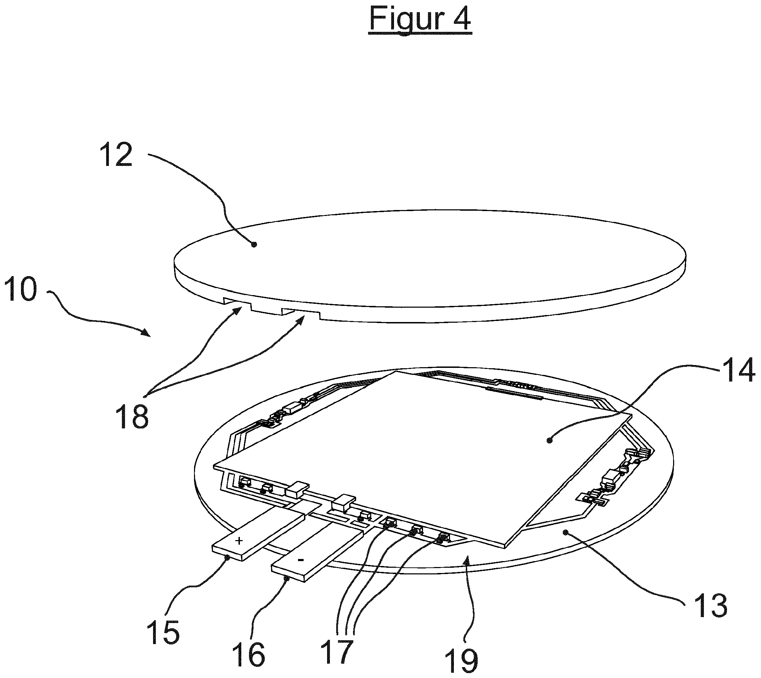

Figur 4 zeigt eine weitere mögliche Alternative, bei der anders als bei den zuvor beschriebenen Varianten der Figuren 1 bis 3 der Abstandsring 11 entfällt. Die Deckplatte 12 schließt dann oberseitig direkt an die Trägerplatte 13 an. Wenn randseitig nach außen hin ragende Kontakte 15, 16 auf der Trägerplatte 13 angebracht sind, ist dies auch ohne Verwendung eines Abstandsrings 11 möglich, wenn wie Figur 4 zeigt zum Beispiel Aussparungen 18 im umfangsseitigen Randbereich der Deckplatte 12 vorgesehen sind. In diesem Fall lassen sich Deckplatte 12 und Trägerplatte 13 quasi bündig aufeinanderlegen und es ergibt sich ein flaches am Umfangsrand geschlossenes OLED-Leuchtenmodul mit nach außen ragenden Kontakten 15, 16. Auch bei dieser Variante kann selbstverständlich die Kontaktierung auch anders erfolgen.

Es sind im Rahmen der Erfindung zahlreiche andere Varianten für die Ausbildung der beiden Kontakte 15, 16 denkbar, über die die Stromversorgung des Leuchtenmoduls 10 erfolgt. Schematisch sind beispielhafte Varianten in den Figuren 5 bis 12 dargestellt. Die Variante von Figur 5 wurde oben bereits erläutert und entspricht einer Unteransicht eines OLED-Leuchtenmoduls 10 mit randseitigen nach außen hin ragenden Kontakten 15, 16 wie in den Explosionsansichten der Figuren 1, 3 und 4 dargestellt.

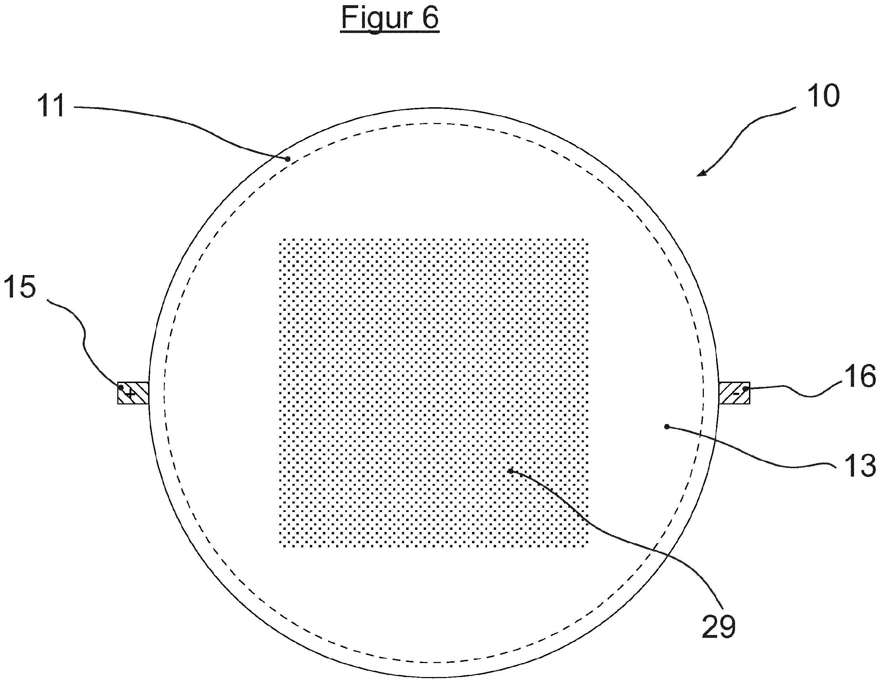

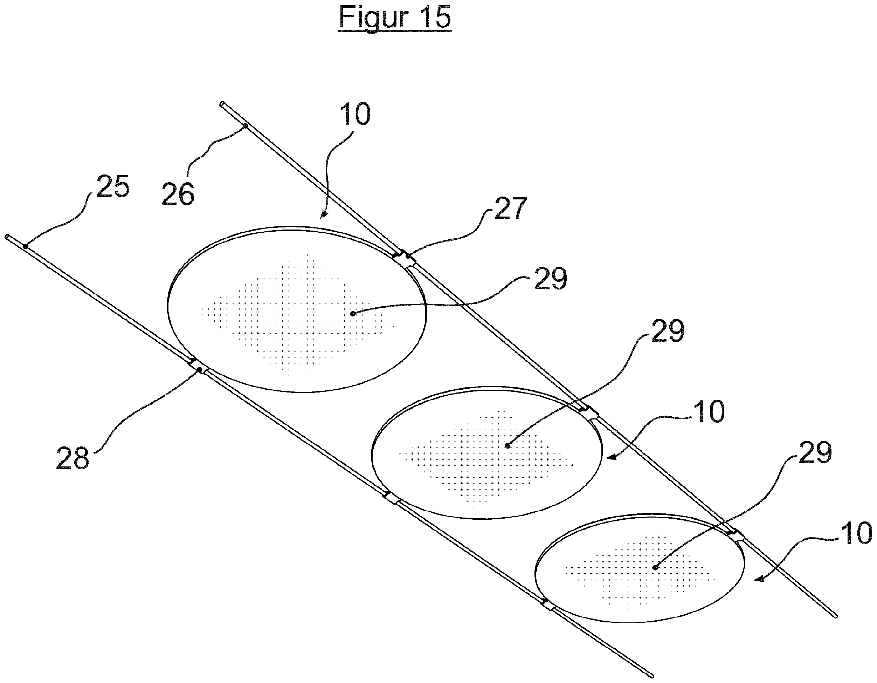

Figur 6 zeigt eine leicht abgewandelte Variante, bei der anders als in Figur 5 die Kontakte 15, 16 der beiden Pole nicht an der gleichen Seite nebeneinander, sondern über den Umfang gesehen einander etwa gegenüber liegend jeweils im Randbereich des OLED-Leuchtenmoduls angeordnet sind. Eine solche Variante schafft eine Ausführungsform, die nicht einseitig auskragend sondern über zwei voneinander beabstandete Stromschienen oder stromführende Stangen kontaktiert werden kann, so wie dies zum Beispiel in Figur 15 dargestellt ist und später noch im Detail erläutert wird.

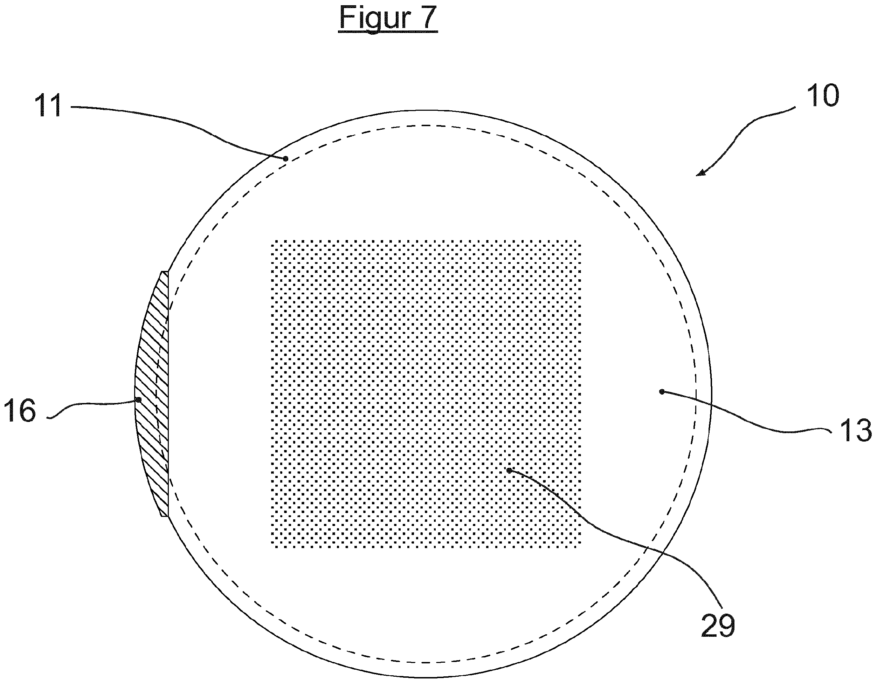

Figur 7 zeigt eine Variante, bei der die beiden Kontakte 15, 16 im Randbereich an einer Seite des Leuchtenmoduls 10 angeordnet sind und übereinander liegen, d.h. man sieht in der Ansicht von unten gemäß Figur 7 nur eine der beiden Kontaktflächen 16, während die zweite nach oben hin gerichtet ist. Beide Kontakte 15, 16 sind hier sektorförmig ausgebildet, d.h. es sind sektorförmige Bereiche, die sich über einen gewissen Abschnitt des Umfangs außen entlang am Randbereich des plattenförmigen Leuchtenmoduls 10 erstrecken.

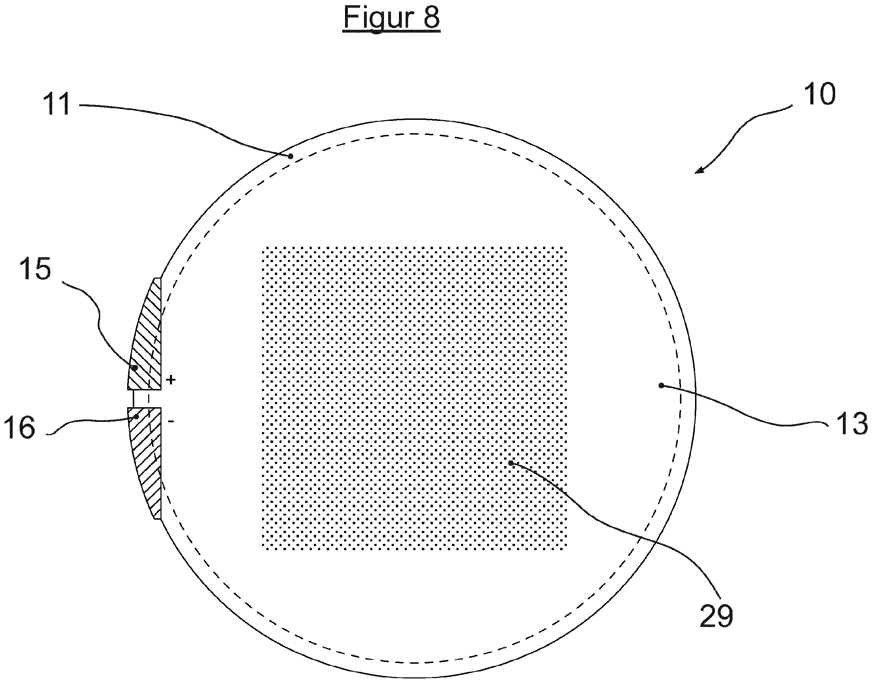

Figur 8 zeigt eine weitere alternative Ausführungsvariante, bei der ähnlich wie in Figur 7 sektorförmige Kontakte 15, 16 vorhanden sind, jedoch mit dem Unterschied, dass bei der Variante von Figur 8 die sektorförmigen Kontakte kleinere Abschnitte am Rand des Umfangs des Leuchtenmoduls bilden, die nebeneinander (also in der gleichen Ebene) liegen und durch einen Zwischenraum voneinander getrennt und somit isoliert sind, während bei der Variante von Figur 7 die beiden Kontaktflächen übereinander und somit in verschiedenen Ebenen liegen.

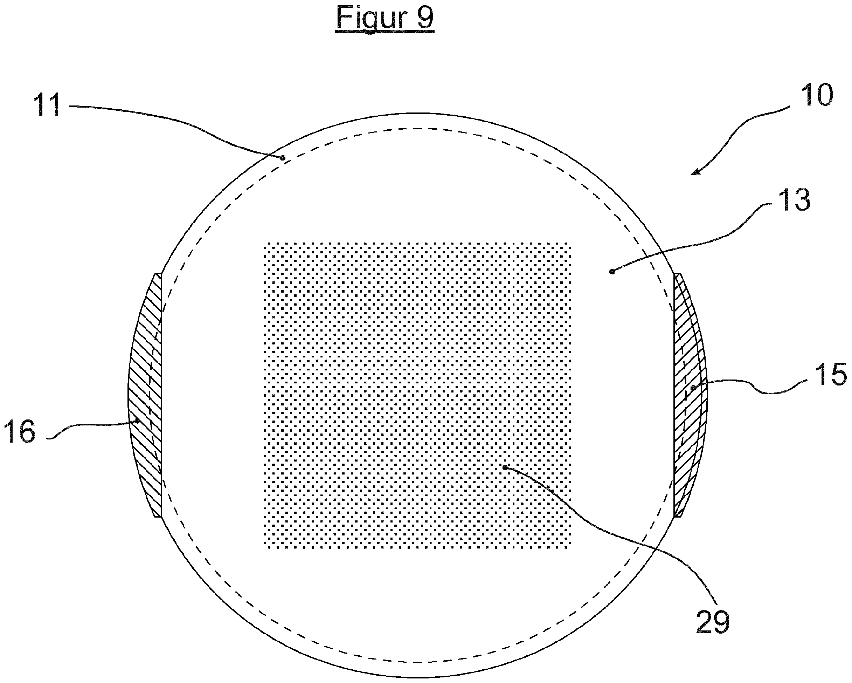

Figur 9 zeigt eine weitere alternative Ausführungsvariante, bei der ähnlich wie in Figur 7 sektorförmige Kontakte 15, 16 vorgesehen sind, jedoch sind diese im Unterschied zu der Variante von Figur 7 nicht auf einer Seite der Trägerplatte 13 am Umfang nebeneinander, sondern am Umfang versetzt um vorzugsweise in etwa 180 ° angeordnet, so dass die beiden Kontakte 15, 16 der beiden Pole sich in etwa bezogen auf den Umfang der Trägerplatte 13 gegenüber liegen. Diese Variante des erfindungsgemäßen OLED-Leuchtenmoduls ist insbesondere interessant, wenn die Stromversorgung der Leuchte über zwei parallele voneinander beabstandete Stromschienen (in Figur 9 nicht dargestellt) erfolgt, so dass jede dieser Stromschienen nur jeweils einen Kontakt einer Polarität eines OLED-Leuchtenmoduls kontaktiert. Bei dieser Variante können die beiden sektorförmigen Kontakte 15, 16 etwas breiter sei, d.h. sich über einen etwas größeren Umfangsbereich der Trägerplatte 13 erstrecken als bei der Variante von Figur 8, was aber nicht so sein muss.

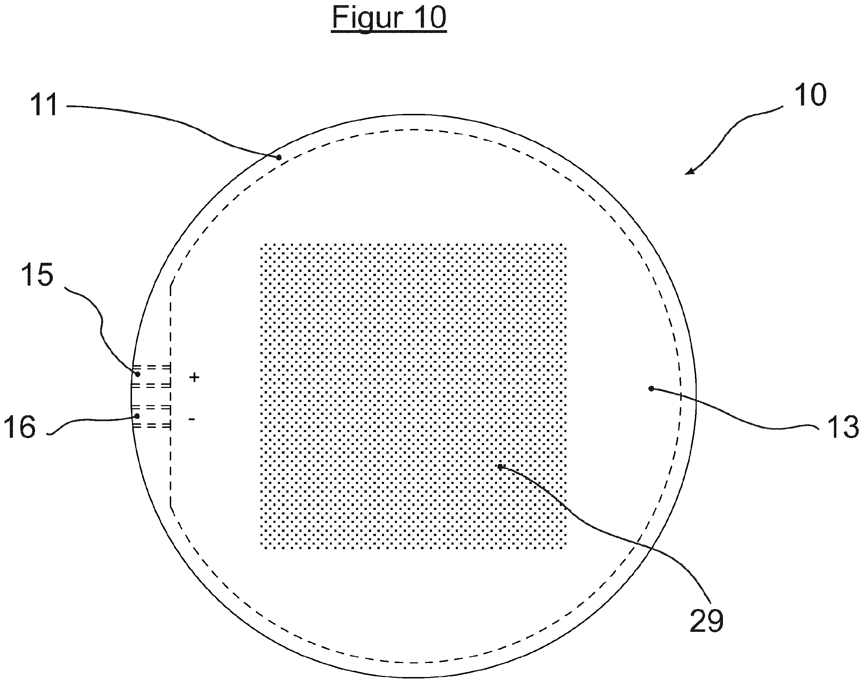

Figur 10 zeigt eine weitere alternative Ausführungsvariante, bei der die Kontakte 15, 16 innen liegen, d.h., dass es sich um Buchsen handelt, die sich durch Einstecken von jeweils steckerartigen Elementen (hier nicht abgebildet) in diese Buchsen im Bereich des Rands des Leuchtenmoduls kontaktieren lassen. In der Abbildung gemäß Figur 10 liegen die beiden Buchsen der Kontakte unterschiedlicher Polarität nebeneinander an einer Seite des OLED-Leuchtenmoduls, so dass sich diese Variante beispielsweise eignet, wenn man beide Kontakte des OLED-Leuchtenmoduls von einer Seite her über ein stromführendes System kontaktieren möchte.

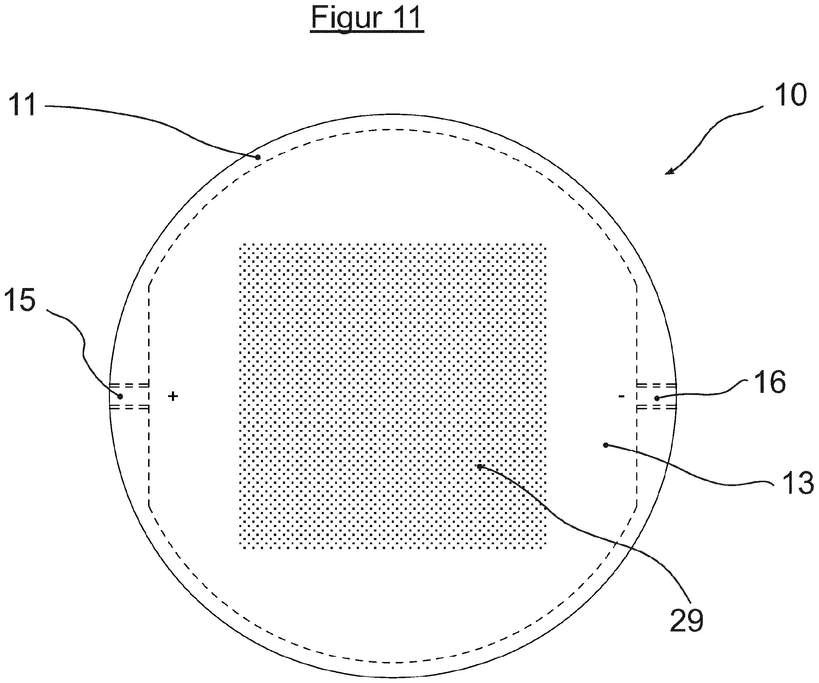

Figur 11 zeigt eine alternative Variante zu Figur 10, bei der ebenfalls buchsenartige, bezogen auf das OLED-Leuchtenmodul innenliegende) Kontakte 15, 16 verwendet werden, wobei diese Kontakte 15, 16 aber an gegenüberliegenden Seiten am Umfang versetzt um beispielsweise 180 ° liegen. Bei dieser Variante ist es wiederum möglich, zur Kontaktierung des OLED-Leuchtenmoduls ein Stromversorgungssystem mit zwei stromführenden Schienen, Drähten oder Stangen zu verwenden, ähnlich wie es in Figur 15 dargestellt ist, jedoch mit der Maßgabe, dass steckerartige Kontakte der Stromschienen in die buchsenartigen Kontakte 15, 16 des OLED-Leuchtenmoduls eingreifen.

Figur 12 zeigt eine weitere Variante, bei der die Kontakte 15, 16 nicht randseitig, sondern oberseitig, insbesondere im Bereich der Fläche der Deckplatte angeordnet sind, beispielsweise etwa in einem mittigen Bereich. Die in Figur 12 gezeigte Draufsicht von der Unterseite her auf das erfindungsgemäße OLED-Leuchtenmodul 10 entspricht beispielsweise im Aufbau dem OLED-Leuchtenmodul aus Trägerplatte 13 und Deckplatte 12 wie er in der Figur 2 dargestellt ist.

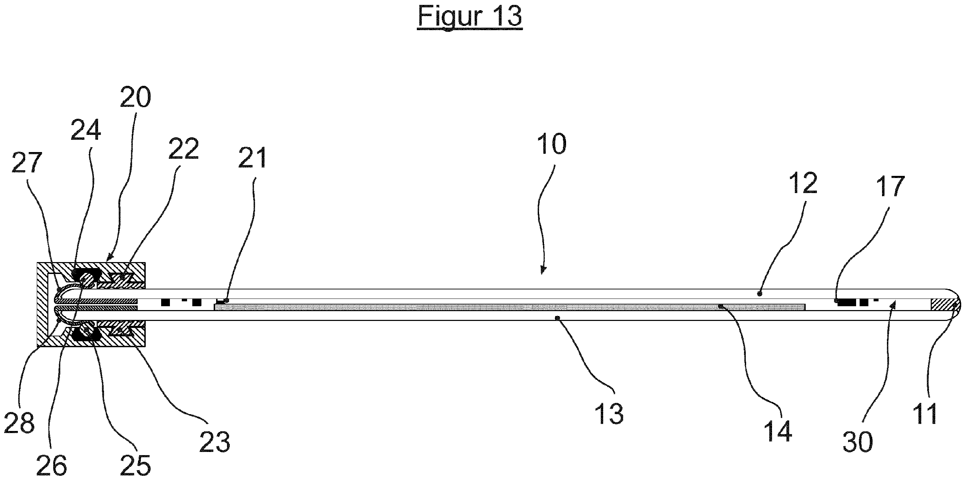

Figur 13, auf die nachfolgend Bezug genommen wird, zeigt einen Schnitt durch ein erfindungsgemäßes OLED-Leuchtenmodul, das in einer Stromschiene 20 aufgenommen und gehalten ist, derart, dass die Stromversorgung des OLED-Leuchtenmoduls über diese Stromschiene durch Einspeisung in die oben erwähnten Kontakte erfolgt. In dieser Ansicht ist zudem eine weitere Variante der Ausbildung der Kontakte gezeigt. Man erkennt, dass das flache Leuchtenmodul mit Trägerplatte 13, OLED-Panel 14 und Deckplatte 12 einseitig in seinem Randbereich in einer Aufnahme der Stromschiene 20 gehalten ist, so dass es von der Stromschiene ausgehend auskragt. In Figur 13 erkennt man auch die innerhalb des Leuchtenmoduls an der Deckplatte 12 unterseitig angebrachten Kontaktfedern 21, die das OLED-Panel kontaktieren und so mit Strom versorgen (in der Regel 24 Volt Gleichstrom.) Weiterhin dargestellt ist der Abstandsring 11 und exemplarisch einige der elektronischen Bauelemente 17 für die Regelung des OLED-Leuchtmittels 14.

In der Schnittansicht gemäß Figur 13 links erkennt man, dass die Stromschiene 20 ein etwa U-förmiges Profil hat, in das der Rand des sandwichartigen OLED-Panels klemmend eingeschoben werden kann, derart, dass die Deckplatte 12 an der Oberseite des Leuchtenmoduls und die Trägerplatte 13 an der Unterseite des Leuchtenmoduls jeweils zwischen in das U-Profil der Stromschiene 20 eingelegten Dichtungen 22 bzw. 23 liegen. In dem U-Profil der Stromschiene 20 befinden sich außerdem innen oben liegend bzw. innen unten liegend jeweils die beiden Stromleiter 25, 26 der Stromschiene für die beiden Pole, wobei diese Stromleiter jeweils nach außen hin zu dem U-Profil der Stromschiene über Isolatoren 24 elektrisch isoliert sind. Weiterhin sind als Kontakte des Leuchtenmoduls zwei Kontaktklammern 27, 28 für minus-Pol und plus-Pol des Leuchtenmoduls vorhanden, die so ausgebildet sind, dass sie einerseits mit den Stromleitern 25, 26 der Stromschiene in Kontakt kommen. Andererseits sind die beiden Kontaktklammern 27, 28 spangenartig ausgebildet und von den Stromleitern ausgehend so umgebogen, dass sie in den Zwischenraum zwischen Deckplatte 12 und Trägerplatte 13 eingreifen und einerseits an der Unterseite der Deckplatte 12 anliegen (die obere Kontaktklammer) bzw. andererseits an der Oberseite der Trägerplatte 13 anliegen (die untere Kontaktklammer).

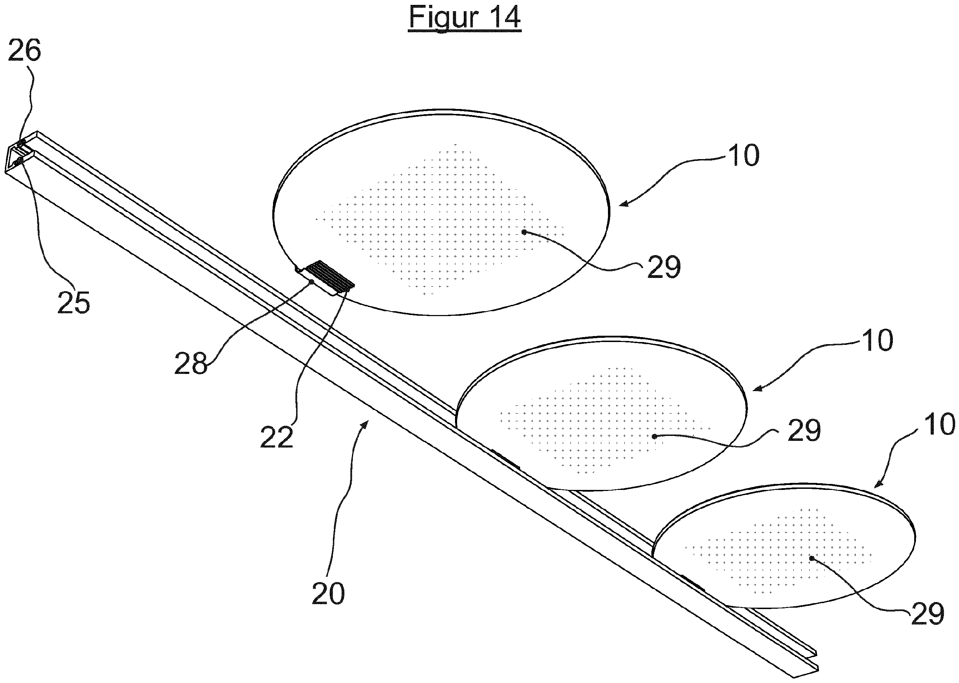

In Figur 14 ist eine perspektivische Ansicht dargestellt, in der an einem Stromschienensystem 20 wie es im Schnitt in Figur 13 dargestellt wurde, mehrere OLED-Leuchtenmodule einseitig auskragend angebracht werden, indem sie beispielsweise in eine im Querschnitt etwa U-förmige Stromschiene der zuvor beschriebenen Art eingeschoben werden, wobei jeweils beide Kontakte des OLED-Leuchtenmoduls 10 über die Kontaktklammern 27, 28 kontaktiert werden können, von denen die untere Kontaktklammer 28 in Figur 14 erkennbar ist. Zwei weitere gleichartige OLED-Leuchtenmodule 10 sind bereits in das Stromschienensystem 20 eingeschoben, während das in der Ansicht linke vordere OLED-Leuchtenmodul vor dem Einschieben in das Stromschienensystem dargestellt ist.

Figur 15 zeigt eine weitere Variante eines Stromschienensystems, die nicht Gegenstand der der vorliegenden Erfindung ist, in perspektivischer Ansicht, bei der anders als in Figur 14 die OLED-Leuchtenmodule 10 nicht einseitig auskragend an dem Stromschienensystem befestigt werden, sondern das Stromschienensystem zwei voneinander beabstandete, beispielsweise zueinander etwa parallel angeordnete Stromleiter 25, 26 wie beispielsweise Stangen, Drähte oder dergleichen umfasst, an denen die OLED-Leuchtenmodule 10 jeweils befestigt werden können. Über diese beiden Stromleiter 25, 26 werden die OLED-Leuchtenmodule 10 auch kontaktiert, und zwar jeweils ein Kontakt eines Pols über je einen Stromleiter, ähnlich wie man dies von Stromschienensystemen für Leuchten mit konventionellen Leuchtmitteln aus dem Niedervoltbereich her kennt. Der Vorteil des in Figur 15 dargestellten Stromversorgungssystems besteht darin, dass sich mehrere OLED-Leuchtenmodule in vergleichsweise einfacher Weise in Parallelschaltung an gemeinsamen Stromleitern anbringen lassen, ohne dass dazu zusätzliche Treiber erforderlich sind, denn alle für den parallelen Betrieb und die Steuerung notwendigen Elemente befinden sich ebenso wie das OLED-Panel, welches als Leuchtmittel dient, bereits in dem OLED-Leuchtenmodul. Dadurch kann eine Person ohne Fachkenntnisse ein solches Beleuchtungssystem installieren und bei Bedarf beliebig durch weitere OLED-Leuchtenmodule erweitern. Bei Verwendung eines Stromversorgungssystems wie es in der Variante gemäß den Figuren 13 und 14 gezeigt ist, ist dies ebenso mit den gleichen Vorteilen möglich.

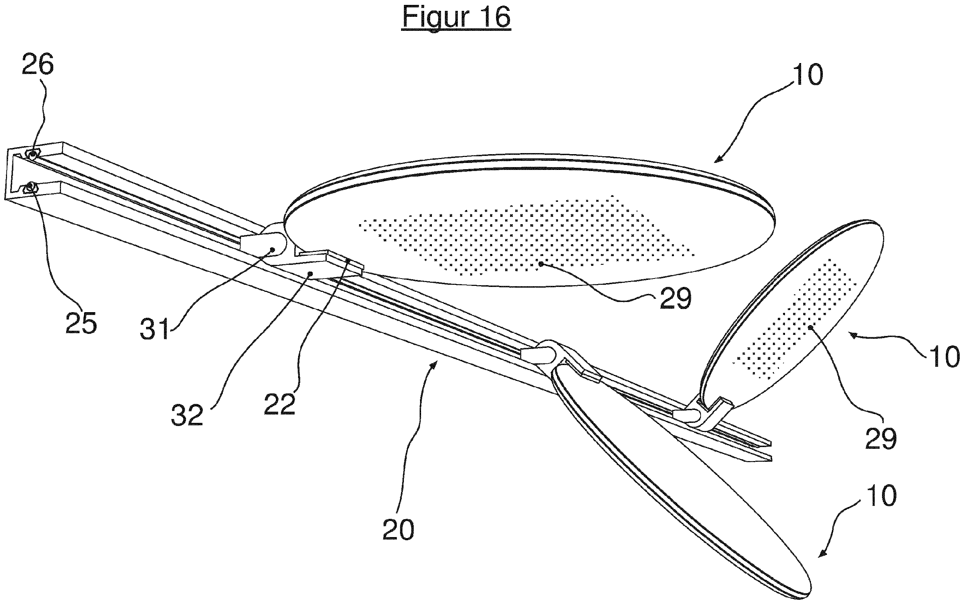

Figur 16 zeigt eine weitere alternative Ausführungsvariante eines erfindungsgemäßen Beleuchtungssystems, bei dem mehrere OLED-Leuchtenmodule 10 an einer Stromschiene 20 so angebracht sind, dass einerseits der Kontakt mit der Stromschiene hergestellt ist und andererseits aber das jeweilige OLED-Leuchtenmodul 10 um eine horizontale Achse schwenkbar ist, wodurch die Lichtabstrahlrichtung veränderbar ist. Dazu sind Kontakte 31, zum Beispiel in Form von Steckkontakten in einem peripheren Randbereich des OLED-Leuchtenmoduls 10 vorhanden, die in die Stromschiene 20 eingesteckt werden können. Diese steckbaren Kontakte sind mit schwenkbaren Teilen 32 von Gelenken verbunden, welche um eine hier horizontale Achse parallel zur Stromschiene schwenkbar sind. An diesen schwenkbaren Teilen 32 der Gelenke befinden sich wiederum im Querschnitt beispielsweise etwas U-förmige Aufnahmen, die das OLED-Leuchtenmodul 10 klemmend aufnehmen. Durch Schwenken der Teile 32 der Gelenke kann man daher wie dies in Figur 16 gezeigt ist, die OLED-Leuchtenmodule um die Achse der Gelenke in diverse Positionen schwenken, so dass die Licht abgebende Fläche 29 das Licht mehr nach unten oder in den Raum hinein abstrahlt.

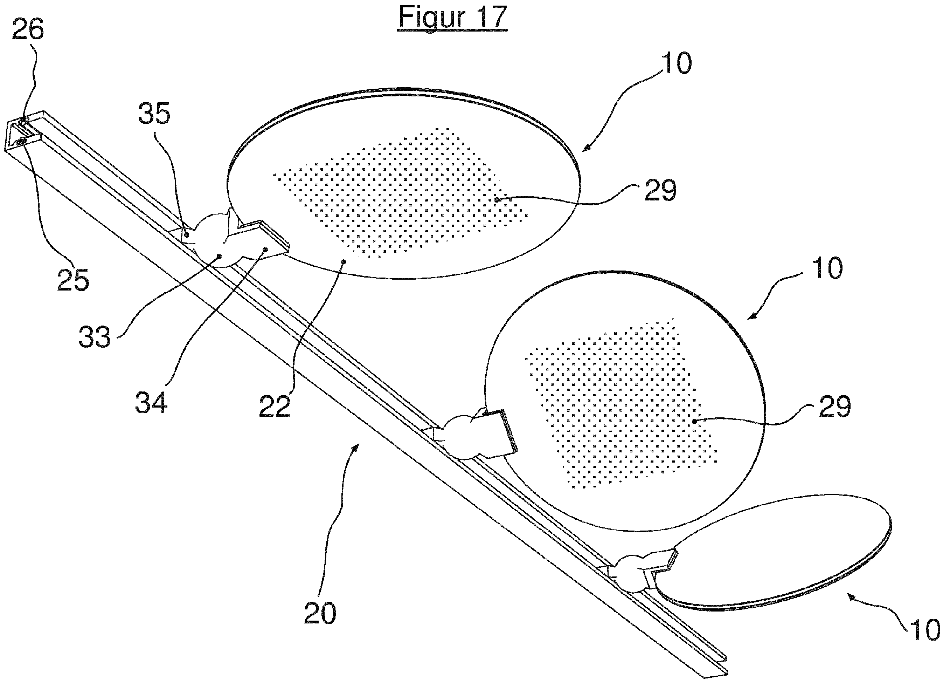

In Figur 17 ist eine weitere alternative Ausführungsvariante eines erfindungsgemäßen Beleuchtungssystems dargestellt, bei der ebenfalls zwischen den OLED-Leuchtenmodulen 10 und den Stromschienen 20 Gelenke 33 vorgesehen sind, wobei es sich hier jedoch um Kugelgelenke handelt. An der dem OLED-Leuchtemodul zugewandten Seite des Gelenks ist auch hier eine Art Klemmaufnahme 34 vorhanden, die zum einen das OLED-Leuchtenmodul 10 hält und zum anderen den elektrischen Kontakt zum OLED-Leuchtenmodul herstellt. An der der Stromschiene 20 zugewandten Seite des kugelförmigen Gelenks 33 sind Steckkontakte 35 angebracht, die in die Stromschiene 20 eingesteckt werden. Das kugelförmige Gelenk 33 hat bei dieser Variante den Vorteil, dass sich das OLED-Leuchtenmodul 10 um mehrere Achsen drehen lässt, so dass noch mehr unterschiedliche räumliche Positionen möglich sind, über die sich die Lichtabstrahlrichtung verändert lässt. Man sieht in Figur 17, dass man beispielsweise die OLED-Leuchtenmodule jeweils um eine Achse schwenken kann, die in etwa senkrecht zur Stromschiene 20 verläuft. Da es sich jedoch um Kugelgelenke 33 handelt, ist es außerdem möglich, ein OLED-Leuchtenmodul 10 jeweils um eine zweite horizontale Achse nach oben oder unten zu schwenken, so wie dies in Figur 16 dargestellt ist. Alternativ zu Kugelgelenken können beispielsweise auch Kardangelenke verwendet werden.

Alternativ zu den zuvor geschilderten Ausführungsvarianten können auch beispielsweise in dem dem Stromversorgungssystem zugewandten Bereich der OLED-Leuchtenmodule 10 Gelenke verwendet werden, die Bewegungen des OLED-Leuchtenmoduls gegenüber dem Stromversorgungssystem um zwei oder auch drei Achsen zulassen, so dass das OLED-Leuchtenmodul 10 beispielsweise wie in Figur 16 gezeigt nach oben oder unten geschwenkt werden kann und wie in Figur 17 dargestellt um eine Achse etwa senkrecht zur Stromschiene gedreht werden kann oder auch beispielsweise um eine dritte hier etwa senkrechte Achse geschwenkt werden kann, die etwa rechtwinklig zur Stromschiene 20 verläuft, so dass das OLED-Leuchtenmodul 10 aus einer in Figur 17 gezeigten mittigen Position heraus seitlich geschwenkt, d.h. zu beiden Seiten hin näher zur Stromschiene 20 hin geschwenkt werden kann. Bei Verwendung von Kugelgelenken 33 wie in Figur 17 dargestellt können gegebenenfalls alle vorgenannten Schwenkbewegungen um drei Achsen mit nur einem Gelenk möglich sein. Dabei sind die Gelenke 31, 32, 33 so ausgebildet, dass die Kontaktierung zwischen den OLED-Leuchtenmodulen 10 und dem Stromversorgungssystem auch bei beliebiger Verstellung der Gelenke erhalten bleibt.

### Bezugszeichenliste

- 10: OLED-Leuchtenmodul
- 11: Abstandsring
- 12: Deckplatte
- 13: Trägerplatte
- 14: OLED-Panel
- 15: stiftartiger Kontakt
- 16: stiftartiger Kontakt
- 17: elektronische Bauelemente
- 18: Aussparungen
- 19: Randbereich der Trägerplatte 13
- 20: Stromschiene
- 21: Kontaktfeder
- 22: Gummidichtung
- 23: Gummidichtung
- 24: Isolator
- 25: Stromleiter/+oder-Pol
- 26: Stromleiter /+ oder -Pol
- 27: Kontaktklammer plus-Pol oder minus-Pol
- 28: Kontaktklammer plus-Pol oder minus-Pol
- 29: Licht abgebende Fläche
- 30: Zwischenraum
- 31: Kontakte
- 32: schwenkbarer Teil des Gelenks
- 33: kugelförmiges Gelenk
- 34: vorderer schwenkbarer Teil des Gelenks, Klemmaufnahme
- 35: Steckkontakt

## Patentansprüche

1. Beleuchtungssystem umfassend wenigstens ein Gleichstrom führendes Stromversorgungssystem (20), sowie umfassend wenigstens ein OLED-Leuchtenmodul (10), welches an dem Stromversorgungssystem (20) anbringbar ist, wobei das OLED-Leuchtenmodul ein flächiges OLED-Leuchtmittel (14) umfasst, sowie mindestens eine mindestens teilweise lichtdurchlässige Trägerplatte (13) und wobei das OLED-Leuchtenmodul von außerhalb kontaktierbare Mittel (15, 16) für die Stromversorgung aufweist, die einen unmittelbaren Anschluss des OLED-Leuchtenmoduls an eine Gleichspannungsquelle ermöglichen, wobei das Stromversorgungssystem (20) wenigstens eine Stromschiene umfasst mit einer schlitzartigen stromführenden Aufnahme, wobei in die schlitzartige Aufnahme der Stromschiene (20) das OLED-Leuchtenmodul (10) an beliebiger Stelle einschiebbar ist, derart, dass zwischen den Mitteln (15, 16) zur Stromversorgung des OLED-Leuchtenmoduls und stromführenden Elementen (25, 26) in der schlitzartigen Aufnahme der Stromschiene ein elektrischer Kontakt hergestellt wird, **dadurch gekennzeichnet, dass** das OLED-Leuchtenmodul in dieses integrierte elektronische Bauelemente (17) aufweist, die einen Betrieb des OLED-Leuchtenmoduls in Parallelschaltung ermöglichen, wobei in eine Stromschiene (20) in deren Längsrichtung hintereinander zwei oder mehrere OLED-Leuchtenmodule (10) einschiebbar sind und der Anschluss der OLED-Leuchtenmodule (10) an die Gleichspannungsquelle in Parallelschaltung möglich ist.

2. Beleuchtungssystem nach Anspruch 1, **dadurch gekennzeichnet, dass** die Mittel zur Stromversorgung (15, 16) in einem Randbereich des OLED-Leuchtenmoduls angeordnet sind und als segmentförmige Kontakte ausgebildet sind.

3. Beleuchtungssystem nach einem der Ansprüche 1 oder 2, **dadurch gekennzeichnet, dass** ein erster Kontakt (15) auf der Oberseite angeordnet ist und ein zweiter Kontakt (16) auf der Unterseite angeordnet ist.

4. Beleuchtungssystem nach einem der Ansprüche 1 bis 3, **dadurch gekennzeichnet, dass** die Mittel (15, 16) zur Stromversorgung als Kontakte beider Polarität übereinander an einer Seite des flächigen OLED-Leuchtenmoduls angeordnet sind.

5. Beleuchtungssystem nach einem der Ansprüche 1 bis 4, **dadurch gekennzeichnet, dass** das OLED-Leuchtenmodul einen flachen sandwichartigen Aufbau aufweist mit mindestens einer Trägerplatte (13) mit einer Licht abgebenden Seite und mindestens einer Deckplatte (12), bei der das flächige OLED-Leuchtmittel (14) (OLED-Panel) zwischen Trägerplatte (13) und Deckplatte (12) angeordnet ist.

6. Beleuchtungssystem nach Anspruch 5, **dadurch gekennzeichnet, dass** das OLED-Panel (14) auf der Trägerplatte (13) und/oder auf der Deckplatte (12) angeordnet oder in eine Ausnehmung der Trägerplatte (13) und/oder eine Ausnehmung der Deckplatte (12) eingelassen ist.

7. Beleuchtungssystem nach einem der Ansprüche 5 oder 6, **dadurch gekennzeichnet, dass** die integrierten elektronischen Bauelemente (17) für den Betrieb des OLED-Leuchtenmoduls in Parallelschaltung an der Trägerplatte (13) oder an der Deckplatte (12) angeordnet sind.

8. Beleuchtungssystem nach einem der Ansprüche 5 bis 7, **dadurch gekennzeichnet, dass** die Deckplatte (12) mit etwas Abstand zu der Trägerplatte (13) auf der der Licht abgebenden Seite abgewandten Rückseite der Trägerplatte (13) angeordnet ist und dass sich elektrische Leiterbahnen, die Kontaktmittel (21) zur Kontaktierung des OLED-Panels sowie für den Betrieb des OLED-Panels notwendige elektronische Bauelemente (17) an der Deckplatte (12) oder an der Trägerplatte (13) befinden.

9. Beleuchtungssystem nach einem der Ansprüche 5 bis 8, **dadurch gekennzeichnet, dass** die Trägerplatte (13) einen runden Umriss aufweist.

10. Beleuchtungssystem nach einem der Ansprüche 5 bis 9, **dadurch gekennzeichnet, dass** zwischen Trägerplatte (13) und Deckplatte (12) ein Abstandsring (11) als Abstandshalter angeordnet ist.

11. Beleuchtungssystem nach einem der Ansprüche 5 bis 10, **dadurch gekennzeichnet, dass** auf der Deckplatte (12) neben den vorzugsweise aufgedruckten Leiterbahnen elektronische Bauelemente (17) angeordnet sind, die regelnde Funktion im Hinblick auf die Stromzufuhr oder Spannungszufuhr zu den OLED-Panels oder die Helligkeit (Dimmfunktion) oder die Farbwiedergabe der OLED-Leuchtmittel (14) haben.

12. Beleuchtungssystem nach einem der Ansprüche 5 bis 11, **dadurch gekennzeichnet, dass** eine Klebeverbindung zur Befestigung des OLED-Panels (14) auf der Trägerplatte (13) und/oder auf der Deckplatte (12) vorgesehen ist oder das OLED-Panel formschlüssig im Abstandsring (11) eingelegt, geklemmt oder eingesteckt ist.

13. Beleuchtungssystem nach einem der Ansprüche 5 bis 12, **dadurch gekennzeichnet, dass** das auf der Trägerplatte (13) oder zwischen Trägerplatte (13) und Deckplatte (12) angeordnete OLED-Panel (14) eine Materialstärke von weniger als 2 mm aufweist unddie Deckplatte (12) aus Glas oder Kunststoff besteht und wenigstens in Teilbereichen transluzent oder transparent ist.

14. Beleuchtungssystem gemäß einem der Ansprüche 1 bis 13, **dadurch gekennzeichnet, dass** das OLED-Leuchtenmodul (10) einen runden Umriss aufweist, wobei das OLED-Leuchtenmodul im Bereich der Mittel (15, 16) zur Stromversorgung des OLED-Leuchtenmoduls (10) wenigstens ein Gelenk (31, 32, 33) aufweist, über das das OLED-Leuchtenmodul (10) gelenkig an dem Stromversorgungssystem (20) anbringbar ist.

15. Beleuchtungssystem nach Anspruch 14, **dadurch gekennzeichnet, dass** das Gelenk (33) als Kardangelenk oder Kugelgelenk ausgebildet ist und/ oder gelenkige Bewegungen des OLED-Leuchtenmoduls (10) gegenüber dem Stromversorgungssystem (20) um wenigstens zwei zueinander senkrechte Achsen zulässt.

## Claims

1. A lighting system including at least one direct current power supply system (20) as well as including at least one OLED lamp module (10), which is attachable to the current supply system (20), wherein the OLED lamp module includes a flat OLED illuminant (14) as well as at least one at least partially translucent carrier plate (13) and wherein the OLED lamp module comprises means (15, 16) contactable from outside for the power supply, which allow the OLED lamp module to be connected directly to the direct current source, wherein the power supply system (20) includes at least one current rail with a slot-like live receiving section, wherein the OLED lamp module (10) can be pushed at any point into the slot-like receiving section of the current rail (20) such that an electrical contact is established between the means (15, 16) for the current supply of the OLED lamp module and live elements (25, 26) in the slot-like receiving section of the current rail, **characterised in that** the OLED lamp module comprises electronic components (17) integrated therein which allow the OLED lamp module to be operated in parallel circuitry, wherein two or more OLED lamp modules (10) can be pushed into a current rail (20) in longitudinal direction thereof one behind the other and the connection of the. OLED lamp modules (10) to the direct current source is possible in parallel circuitry.

2. The lighting system according to claim 1, **characterised in that** the means for the current supply (15, 16) are arranged in a rim region of the OLED lamp module and are designed as segment-shaped contacts.

3. The lighting system according to one of claims 1 or 2, **characterised in that** a first contact (15) is arranged on the topside and a second contact (16) is arranged on the underside.

4. The lighting system according to one of claims 1 to 3, **characterised in that** the means (15, 16) for the power supply are arranged as contacts of both polarities one above the other on one side of the flat OLED lamp module.

5. The lighting system according to one of claims 1 to 4, **characterised in that** the OLED lamp module is of flat sandwich-like construction with at least one carrier plate (13) with a light-emitting side and at least one cover plate (12), in which the flat OLED illuminant (14) (OLED panel) is arranged between carrier plate (13) and cover plate (12).

6. The lighting system according to claim 5, **characterised in that** the OLED panel (14) is arranged on the carrier plate (13) and/or on the cover plate (12) or is embedded in a recess of the carrier plate (13) and/or a recess of the cover plate (12).

7. The lighting system according to one of claims 5 or 6, **characterised in that** the integrated electronic components (17) for operating the OLED lamp module in parallel circuitry are arranged on the carrier plate (13) or on the cover plate (12).

8. The lighting system according to one of claims 5 to 7, **characterised in that** the cover plate (12) is arranged at a small distance from the carrier plate (13) on the backside of the carrier plate (13), which faces away from the light-emitting side and **in that** electrical conductors, the contact means (21) for contacting the OLED panel as well as electronic components (17) necessary for the operation of the OLED panel are situated on the cover plate (12) or on the carrier plate (13).

9. The lighting system according to one of claims 5 to 8, **characterised in that** the carrier plate (13) has a round contour.

10. The lighting system according to one of claims 5 to 9, **characterised in that** a distance ring (11) is arranged as a spacer between carrier plate (13) and cover plate (12) .

11. The lighting system according to one of claims 5 to 10, **characterised in that** electronic components (17) are arranged on the cover plate (12) adjacent to the preferably printed-on conductors, which function in a regulating manner with regard to the power supply or voltage supply to the OLED panels or the brightness (dimming function) or the colour reproduction of the OLED illuminants (14).

12. The lighting system according to one of claims 5 to 11, **characterised in that** an adhesive connection is provided for fastening the OLED panel (14) on the carrier plate (13) and/or the cover plate (12) or **in that** the OLED panel is inserted, clamped or pushed in a form-locked manner into the distance ring (11).

13. The lighting system according to one of claims 5 to 12, **characterised in that** the OLED panel (14) arranged on the carrier plate (13) or between carrier plate (13) and cover plate (12) has a material thickness of less than 2 mm and **in that** the cover plate (12) consists of glass or plastic and, at least in some regions, is translucent or transparent.

14. The lighting system according to one of claims 1 to 13, **characterised in that** the OLED module (10) has a round contour, wherein the OLED lamp module, in the region of the means (15, 16) for the power supply of the OLED lamp module (10), comprises at least one joint (31, 32, 33), via which the OLED lamp module (10) can be attached to the power supply system (20) in an articulated manner.

15. The lighting system according to claim 14, **characterised in that** the joint (33) is designed as a cardan joint or ball joint and/or permits articulated movements of the OLED lamp module (10) in relation to the power supply system (20) about at least two mutually perpendicular axes.

## Revendications

1. Système d'éclairage comprenant au moins un système d'alimentation en courant traversé par un courant continu (20) ainsi que comprenant au moins un module d'éclairage OLED (10) pouvant être monté sur le système d'alimentation en courant (20), dans lequel le module d'éclairage OLED comprend un moyen d'éclairage OLED en nappe (14) ainsi qu'au moins une plaque de support (13) au moins partiellement translucide, et dans lequel le module d'éclairage OLED présente des moyens pouvant être contactés depuis l'extérieur (15, 16) pour l'alimentation en courant, lesquels permettent un raccordement direct du module d'éclairage OLED à la source de tension continue, dans lequel le système d'alimentation en courant (20) comprend au moins une barre conductrice avec un logement conducteur semblable à une fente, dans lequel le module d'éclairage OLED (10) peut être inséré dans le logement semblable à une fente de la barre conductrice (20) à un emplacement quelconque de manière à ce que, entre les moyens (15, 16) pour l'alimentation en courant du module d'éclairage OLED et des éléments traversés par du courant (25, 26) dans le logement semblable à une fente de la barre conductrice, un contact électrique est établi, **caractérisé en ce que** le module d'éclairage OLED présente des composants .électroniques (17) intégrés dans celui-ci, lesquels permettent un fonctionnement du module d'éclairage OLED en montage en parallèle, dans lequel, dans une barre conductrice (20), dans le sens longitudinal de celle-ci, deux ou davantage de modules d'éclairage OLED (10) peuvent être insérés les uns derrière les autres et le raccordement des modules d'éclairage OLED (10) à la source de tension continue est possible en montage en parallèle.

2. Système d'éclairage selon la revendication 1, **caractérisé en ce que** les moyens pour l'alimentation en courant (15, 16) sont agencés dans une zone de bord du module d'éclairage OLED et sont réalisés en tant que contacts en forme de segment.

3. Système d'éclairage selon l'une des revendications 1 ou 2, **caractérisé en ce qu'**un premier contact (15) est disposé sur la face supérieure et un deuxième contact (16) est disposé sur la face inférieure.

4. Système d'éclairage selon l'une des revendications 1 à 3, **caractérisé en ce que** les moyens (15, 16) pour l'alimentation en courant sont disposés en tant que contacts des deux polarités les uns au-dessus des autres sur un côté du module d'éclairage OLED en nappe.

5. Système d'éclairage selon l'une des revendications 1 à 4, **caractérisé en ce que** le module d'éclairage OLED présente une structure plate en sandwich avec au moins une plaque de support (13) avec une face émettant de la lumière et au moins une plaque de couverture (12) où le moyen d'éclairage OLED en nappe (14) (panneau OLED) est disposé entre la plaque de support (13) et la plaque de couverture (12).

6. Système d'éclairage selon la revendication 5, **caractérisé en ce que** le panneau OLED (14) est disposé sur la plaque de support (13) et/ou la plaque de couverture (12) ou est encastré dans un évidement de la plaque de support (13) et/ou un évidement de la plaque de couverture (12).

7. Système d'éclairage selon l'une des revendications 5 ou 6, **caractérisé en ce que** les composants électroniques (17) intégrés pour le fonctionnement du module d'éclairage OLED sont disposés en montage en parallèle au niveau de la plaque de support (13) ou la plaque de couverture (12).

8. Système d'éclairage selon l'une des revendications 5 à 7, **caractérisé en ce que** la plaque de couverture (12) est disposée un peu à distance de la plaque de support (13) sur la face arrière de la plaque de support (13) tournant le dos à la face émettant de la lumière, et que des pistes conductrices électriques, les moyens de contact (21) pour contacter le panneau OLED, ainsi que des composants électroniques (17) nécessaires pour le fonctionnement du panneau OLED se trouvent au niveau de la plaque de couverture (12) ou de la plaque de support (13).

9. Système d'éclairage selon l'une des revendications 5 à 8, **caractérisé en ce que** la plaque de support (13) présente un contour rond.

10. Système d'éclairage selon l'une des revendications 5 à 9, **caractérisé en ce qu'**une bague d'espacement (11) en tant que pièce d'écartement est disposée entre la plaque de support (13) et la plaque de couverture (12) .

11. Système d'éclairage selon l'une des revendications 5 à 10, caractériséen ce que, sur la plaque de couverture (12), à côté des pistes conductrices de préférence imprimées, des composants électroniques (17) sont disposés, lesquels ont une fonction de réglage concernant l'alimentation en courant ou l'alimentation en tension des panneaux OLED ou la luminosité (fonction de variation d'intensité) ou le rendu des couleurs des moyens d'éclairage OLED (14).

12. Système d'éclairage selon l'une des revendications 5 à 11, **caractérisé en ce qu'**une liaison par collage pour la fixation du panneau OLED (14) sur la plaque de support (13) et/ou la plaque de couverture (12) est prévue, ou que le panneau OLED est placé, bloqué, ou inséré par conjugaison de formes dans la bague d'espacement (11).

13. Système d'éclairage selon l'une des revendications 5 à 12, **caractérisé en ce que** le panneau OLED (14) disposé sur la plaque de support (13) ou entre la plaque de support (13) et la plaque de couverture (12) présente une épaisseur de matériau de moins de 2 mm et que la plaque de couverture (12) se compose de verre ou de plastique et est translucide ou transparente au moins dans des zones partielles.

14. Système d'éclairage selon l'une des revendications 1 à 13, **caractérisé en ce que** le module d'éclairage OLED (10) présente un contour rond, dans lequel le module d'éclairage OLED présente, dans la zone des moyens (15, 16) pour l'alimentation en courant du module d'éclairage OLED (10), au moins une articulation (31, 32, 33) via laquelle le module d'éclairage OLED (10) peut être monté de manière articulée sur le système d'alimentation en courant (20).

15. Système d'éclairage selon la revendication 14, **caractérisé en ce que** l'articulation (33) est réalisée en tant que cardan ou rotule et/ou autorise des mouvements articulés du module d'éclairage OLED (10) par rapport au système d'alimentation en courant (20) autour d'au moins deux axes perpendiculaires entre eux.
